(19) **Europäisches Patentamt** / **European Patent Office** / **Office européen des brevets**

(11) **EP 4 786 533 A1**

(12) # EUROPEAN PATENT APPLICATION
published in accordance with Art. 153(4) EPC

(43) Date of publication:
05.08.2026 Bulletin 2026/32

(21) Application number: 24871667.2

(22) Date of filing: 27.08.2024

(51) International Patent Classification (IPC):
C08J 9/18 (2006.01)     B29C 44/00 (2006.01)
B29C 44/44 (2006.01)

(52) Cooperative Patent Classification (CPC):
B29C 44/00; B29C 44/44; C08J 9/18

(86) International application number:
PCT/JP2024/030554

(87) International publication number:
WO 2025/069866 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.09.2023 JP 2023161733

(71) Applicant: JSP International SARL
60190 Estrées-Saint-Denis (FR)

(72) Inventors:
• PEREIRA, Antonio
60190 Estrees-Saint-Denis (FR)
• KOPF, Valentin
60190 Estrees-Saint-Denis (FR)
• HIRA, Akinobu
Kanuma-shi, Tochigi 322-0014 (JP)

(74) Representative: Hafner & Kohl PartmbB
Schleiermacherstraße 25
90491 Nürnberg (DE)

(54) **THERMOPLASTIC POLYMER FOAMED PARTICLE, THERMOPLASTIC POLYMER FOAMED PARTICLE MOLDED BODY, AND IDENTIFICATION METHOD FOR THERMOPLASTIC POLYMER FOAMED PARTICLE OR THERMOPLASTIC POLYMER FOAMED PARTICLE MOLDED BODY**

(57) Provided are thermoplastic polymer expanded beads which themselves can be identified, and a molded article of thermoplastic polymer expanded beads capable of being identified without impairing aesthetic appearance by being formed from the identifiable thermoplastic polymer expanded beads. Further provided is a method for identifying these thermoplastic polymer expanded beads and/or a molded article of thermoplastic polymer expanded beads.

Thermoplastic polymer expanded beads (100) exhibit a light emission reaction derived from luminescent rare earth elements (10) upon electromagnetic wave irradiation, and a molded article of thermoplastic polymer expanded beads is configured by in-mold molding the thermoplastic polymer expanded beads (100) and exhibits a light emission reaction. A method for identifying the thermoplastic polymer expanded beads or the molded article of thermoplastic polymer expanded beads in-

cludes: i) an electromagnetic wave irradiation step of irradiating a surface of the thermoplastic polymer expanded beads or the molded article of thermoplastic polymer expanded beads with electromagnetic waves; and ii) a detection step of detecting, with a detection device, a light emission reaction derived from luminescent rare earth elements due to the electromagnetic wave irradiation to obtain an emission spectrum, a first method of the identification method further includes iii-1) an identification step of comparing the emission spectrum with a blank spectrum showing no light emission reaction derived from luminescent rare earth elements, and a second method of the identification method further includes iii-2) an identification step of collating the emission spectrum with a preset reference emission spectrum showing a light emission reaction derived from luminescent rare earth elements.

EP 4 786 533 A1

【FIG.1】

**Description**

Technical Field

The present invention relates to thermoplastic polymer expanded beads having identifiability, a molded article of thermoplastic polymer expanded beads having identifiability, and a method for identifying thermoplastic polymer expanded beads or a molded article of thermoplastic polymer expanded beads.

Background Art

Conventionally, from various aspects, there has been proposed a technology that enables identification by attaching identification information to a product. Examples of the various aspects include forgery prevention, product management, and production history.

As a technique for attaching identification information to a resin molded article, for example, Patent Literature 1 discloses a technique of attaching a predetermined index to a surface of a foamed resin molded body using a piston distal end surface that closes a cavity in a raw material filling machine for foamed resin molding. Patent Literature 2 discloses a technique in which a surface of a molded article obtained by molding a resin composition is irradiated with a laser to be partially foamed to form a foamed identification portion, and marking is performed.

Citation List

Patent Literatures

Patent Literature 1: JP 2010-149297 A
Patent Literature 2: WO 2022/191310 A1

Summary of Invention

Technical Problem

However, when a molded article of expanded beads configured by using expanded beads is identified, there are the following problems. In the conventional techniques, since an identification mark that can be visually identified is attached to the surface of the molded article, the identification mark is conspicuous in appearance, and there is a problem in terms of aesthetic appearance. Therefore, the uses of the molded article and the sales destinations may be limited.

According to the technique of attaching an identification mark to the surface of the molded article as in the above-described conventional techniques, the molded article of expanded beads itself can be identified. However, it is not possible to identify which expanded beads were used in the production of the molded article of expanded beads.

For example, a manufacturer of expanded beads may be different from a manufacturer of a molded article of expanded beads who purchases the expanded beads and produces the molded article of expanded beads. In such a case, it is difficult for a user of the molded article of expanded beads to identify whether or not the molded article of expanded beads is produced using desired expanded beads to have been specified.

On the other hand, in order to make the expanded beads themselves identifiable, a special production apparatus is required to physically mark the surfaces of the expanded beads, leading to an increase in cost, which is not realistic.

The present invention has been made in view of the above problems. That is, the present invention provides thermoplastic polymer expanded beads which themselves can be identified, and a molded article of thermoplastic polymer expanded beads capable of being identified without impairing aesthetic appearance by being formed from the identifiable thermoplastic polymer expanded beads. The present invention further provides a method for identifying these thermoplastic polymer expanded beads and/or a molded article of thermoplastic polymer expanded beads.

Solution to Problem

Thermoplastic polymer expanded beads of the present invention exhibit a light emission reaction derived from luminescent rare earth elements upon electromagnetic wave irradiation.

A molded article of thermoplastic polymer expanded beads of the present invention is produced by in-mold molding the thermoplastic polymer expanded beads of the present invention.

A method for identifying thermoplastic polymer expanded beads or a molded article of thermoplastic polymer expanded beads of the present invention includes at least one of the following first identification method and second identification method.

That is, the first identification method includes: i) an electromagnetic wave irradiation step of irradiating a surface of the thermoplastic polymer expanded beads or a molded article of thermoplastic polymer expanded beads with electromagnetic waves; ii) a detection step of detecting, with a detection device, a light emission reaction derived from luminescent rare earth elements due to the electromagnetic wave irradiation to obtain an emission spectrum; and iii-1) an identification step of comparing the emission spectrum with a blank spectrum showing no light emission reaction derived from luminescent rare earth elements.

The second identification method includes: i) an electromagnetic wave irradiation step of irradiating a surface of the thermoplastic polymer expanded beads or a molded article of thermoplastic polymer expanded beads with electromagnetic waves; ii) a detection step of detecting, with a detection device, a light emission reaction derived from luminescent rare earth elements due to the electromagnetic wave irradiation to obtain an emission spectrum; and iii-2) an identification step of collating the emission spectrum with a preset reference emission spectrum showing a light emission reaction derived from luminescent rare earth elements.

Advantageous Effects of Invention

The thermoplastic polymer expanded beads of the present invention exhibit a light emission reaction derived from luminescent rare earth elements upon electromagnetic wave irradiation. Therefore, the thermoplastic polymer expanded beads of the present invention can be identified by detecting the light emission reaction.

The molded article of thermoplastic polymer expanded beads produced by in-mold molding the thermoplastic polymer expanded beads of the present invention is formed from the expanded beads exhibiting the light emission reaction. Therefore, the molded article of thermoplastic polymer expanded beads of the present invention exhibits a light emission reaction derived from luminescent rare earth elements upon electromagnetic wave irradiation. The molded article of thermoplastic polymer expanded beads can be identified by detecting the light emission reaction, and the molded article of thermoplastic polymer expanded beads can also be identified to be formed from the thermoplastic polymer expanded beads of the present invention.

In the first identification method of the present invention, an emission spectrum detected in the light emission reaction derived from luminescent rare earth elements in the thermoplastic polymer expanded beads or the molded article of thermoplastic polymer expanded beads is compared with a blank spectrum showing no light emission reaction derived from luminescent rare earth elements. Thus, the thermoplastic polymer expanded beads or the molded article of thermoplastic polymer expanded beads of the present invention can be identified by the first identification method.

In the second identification method of the present invention, an emission spectrum detected in the light emission reaction derived from luminescent rare earth elements in the thermoplastic polymer expanded beads or the molded article of thermoplastic polymer expanded beads is collated with a preset reference emission spectrum showing a light emission reaction derived from luminescent rare earth elements. Thus, by the second identification method, the thermoplastic polymer expanded beads or the molded article of thermoplastic polymer expanded beads of the present invention can be identified, and it is possible to identify whether or not to be predetermined thermoplastic polymer expanded beads or a predetermined molded article of thermoplastic polymer expanded beads.

Brief Description of Drawings

Fig. 1 is a schematic cross-sectional view of a single-layer type thermoplastic polymer expanded bead as one embodiment of the present invention.

Fig. 2 is a schematic cross-sectional view of a two-layer type thermoplastic polymer expanded bead as one embodiment of the present invention.

Fig. 3 is a schematic cross-sectional view of a three-layer type thermoplastic polymer expanded bead as one embodiment of the present invention.

Fig. 4 is a schematic cross-sectional view taken along an axial direction of a two-layer columnar type thermoplastic polymer expanded bead as one embodiment of the present invention.

Fig. 5 is a chart showing an emission spectrum of a luminescent compound 1 used in Examples.

Fig. 6 is a chart showing an emission spectrum of a molded article of expanded beads of Example 1 and a baseline which is a spectrum of a molded article of expanded beads as a blank.

Fig. 7 is a schematic diagram of a DSC curve measured for obtaining a total heat of fusion and a heat quantity of a high-temperature peak of polyolefin-based resin expanded beads according to an embodiment of the present invention.

Description of Embodiments

Hereinafter, thermoplastic polymer expanded beads of the present invention (hereinafter, referred to as the expanded beads of the present invention or the expanded beads in some cases), a molded article of thermoplastic polymer expanded beads of the present invention (hereinafter, referred to as the molded article of expanded beads or molded article of the present invention in some cases), and a method for identifying thermoplastic polymer expanded beads or a molded article of thermoplastic polymer expanded beads of the present invention (hereinafter, simply referred to as the identification method of the present invention or the identification method in some cases) will be described.

With regard to the description of the present invention, the emission spectrum, the intrinsic emission spectrum of the luminescent rare earth element component, the blank spectrum showing no light emission reaction derived from luminescent rare earth elements, and a preset reference emission spectrum showing a light emission reaction derived from luminescent rare earth elements refer to the following.

The emission spectrum means an emission spectrum of a light emission reaction caused by irradiating an object to be measured with an electromagnetic wave having a predetermined wavelength. Here, the object to be measured includes a molded product exemplified by expanded beads and a molded article of expanded beads, and a luminescent rare earth element component itself. The emission spectrum according to the present invention is a concept including one or two or more elements selected from the shape of the entire pattern, the number of peaks, the wavelength at which each peak is detected, the shape of each peak, the intensity ratio between the peaks, the area ratio between the peaks, and the like. The wavelength of light emitted in the light emission reaction is not particularly limited, and examples thereof include visible light and infrared rays.

The intrinsic emission spectrum of the luminescent rare earth element component refers to an emission spectrum detected when the luminescent rare earth element component itself is irradiated with an electromagnetic wave having a predetermined wavelength. The intrinsic emission spectrum varies depending on the type or combination of the selected luminescent rare earth elements. Therefore, it is possible to cause light emission reactions exhibiting different intrinsic emission spectra by a specific one of the luminescent rare earth elements or a combination of two or more of the luminescent rare earth elements. Note that, in the present specification, the intrinsic emission spectrum of the luminescent rare earth element component may be simply referred to as an intrinsic emission spectrum.

The blank spectrum showing no light emission reaction derived from luminescent rare earth elements refers to a spectrum detected when a molded product containing no luminescent rare earth element component and formed from a polymer having a predetermined composition is irradiated with an electromagnetic wave having a predetermined wavelength. The molded product may be expanded beads or a molded article of expanded beads. Specifically, the blank spectrum showing no light emission reaction derived from luminescent rare earth elements is a spectrum detected when a molded product formed from a polymer having the same composition as that of the expanded beads or the molded article of expanded beads to be identified except that no luminescent rare earth element component is contained is irradiated with an electromagnetic wave of a predetermined wavelength. The molded product may be expanded beads or a molded article of expanded beads manufactured by the same manufacturing method as that of the expanded beads or the molded article of expanded beads to be identified. Note that, in the present specification, the blank spectrum showing no light emission reaction derived from luminescent rare earth elements may be simply referred to as a blank spectrum. The blank spectrum is used in a first identification method described later.

The preset reference emission spectrum showing a light emission reaction derived from luminescent rare earth elements refers to an emission spectrum detected when a molded product containing a predetermined luminescent rare earth element component and formed from a polymer having a predetermined composition is irradiated with an electromagnetic wave having a predetermined wavelength. The emission spectrum shows a light emission reaction derived from luminescent rare earth elements. The molded product may be expanded beads or a molded article of expanded beads. The content of the luminescent rare earth element component in the expanded beads used for acquiring the reference emission spectrum can be approximately 0.0001% by mass or more and 0.5% by mass or less. Note that, in the present specification, the preset reference emission spectrum showing a light emission reaction derived from luminescent rare earth elements may be simply referred to as a reference emission spectrum or a preset reference emission spectrum. The reference emission spectrum is used in a second identification method described later. Hereinafter, a step of detecting a reference emission spectrum by irradiating expanded beads containing a predetermined luminescent rare earth element component and formed from a polymer having a predetermined composition with an electromagnetic wave having a predetermined wavelength will be described in some cases. Such a step can be similarly performed even when a molded article of expanded beads formed from the expanded beads is used instead of the expanded beads.

[Thermoplastic polymer expanded beads]

The expanded beads of the present invention are thermoplastic polymer expanded beads exhibiting a light emission reaction derived from luminescent rare earth elements upon electromagnetic wave irradiation. Specifically, the expanded beads exhibit a light emission reaction that can be detected as an emission spectrum upon electromagnetic wave irradiation.

The present invention is completely different from the prior art in which physical marking is performed on a molded article of expanded beads, and imparts identifiability to expanded beads themselves constituting the molded article of expanded beads by the light emission reaction. Therefore, the present invention does not impair the aesthetic appearance of the molded article of expanded beads itself. Identification can be performed by applying an identification method described later. The spectrum of the light emission reaction derived from the luminescent rare earth element varies depending on the type and combination of the luminescent rare earth elements contained in the expanded beads and the composition of the polymer constituting the expanded beads. Therefore, for example, according to the second identification method described later, the expanded beads can be more strictly identified by collating whether or not the emission spectrum serving as the preset reference emission spectrum and the emission spectrum detected from the expanded beads to be identified exhibit similar patterns.

When the molded article of expanded beads obtained by in-mold molding the expanded beads of the present invention is irradiated with an electromagnetic wave, the expanded beads of the present invention constituting the molded article of expanded beads exhibit a light emission reaction. By detecting such the light emission reaction, it is identified that the molded article of expanded beads is formed using the expanded beads of the present invention. Therefore, according to the present invention, it is possible to track, from the molded article of expanded beads, the expanded beads constituting the molded article of expanded beads. In other words, according to the present invention, it is possible to grasp, from the molded article of expanded beads, for example, source information and the like of the expanded beads constituting the molded article of expanded beads. The graspable information including the source information is information associated with a preset reference emission spectrum, and details thereof will be described later.

Hereinafter, the expanded beads of the present invention will be described in more detail. Note that, in the following description, a preferable numerical range of the present invention may be indicated as appropriate. In this case, a preferred range, a more preferred range, and a particularly preferred range regarding the upper limit and the lower limit of the numerical range can be determined from all combinations of the upper limit and the lower limit. In the following description, "A to B" representing a numerical range has the same meaning as "A or more and B or less", and represents a numerical range including A and B that are end points of the numerical range.

(Thermoplastic polymer)

The expanded beads of the present invention are formed from a thermoplastic polymer.

The thermoplastic polymer refers to a polymer having thermoplasticity, and specifically includes a thermoplastic resin and a thermoplastic elastomer.

Examples of the thermoplastic resin include polyolefin-based resins such as a polypropylene-based resin and a polyethylene-based resin; a polystyrene-based resin; a polyamide-based resin; a polyester-based resin; a polycarbonate-based resin; and a modified polyphenylene ether-based resin.

In the present specification, the polypropylene-based resin refers to a propylene homopolymer and a polypropylene-based copolymer containing 50% by mass or more of a propylene-derived structural unit. Specific examples thereof include propylene homopolymers such as isotactic polypropylene, syndiotactic polypropylene, and atactic polypropylene; and propylene-based copolymers such as an ethylene-propylene copolymer, a butene-propylene copolymer, a hexene-propylene copolymer, an ethylene-propylene-butene terpolymer, and a propylene-maleic anhydride copolymer. These copolymers may be, for example, random copolymers or block copolymers, but are preferably random copolymers.

In the present specification, the polyethylene-based resin refers to an ethylene homopolymer and an ethylene-based copolymer containing 50% by mass or more of an ethylene-derived structural unit. Specific examples thereof include polyethylenes such as high-density polyethylene (PE-HD), medium-density polyethylene (PE-MD), low-density polyethylene (PE-LD), linear low-density polyethylene (PE-LLD), and linear ultra-low-density polyethylene; and ethylene-based copolymers such as an ethylenevinyl acetate copolymer and an ethylene-methyl methacrylate copolymer.

In the present specification, the polyamide-based resin refers to a resin having an amide bond in the molecular chain. Specific examples thereof include homopolyamides such as nylon 6 obtained by ring-opening polymerization of ε-caprolactam, and nylon 66 obtained by polycondensation of hexamethylenediamine and adipic acid; and polyamide copolymers such as polycaproamide/polyhexamethylene adipamide copolymer (nylon 6/66), caprolactam/hexamethylene diaminoadipic acid/lauryl lactam (nylon 6/66/12), and caprolactam/lauryl lactam copolymer (nylon 6/12).

In the present specification, the polyester-based resin refers to a resin having an ester bond in the molecular chain. Specific examples thereof include aliphatic polyesters such as polylactic acid, polybutylene succinate, polybutylene adipate, and polyhydroxybutyric acid; and aromatic polyesters such as polyethylene terephthalate and polybutylene terephthalate.

Examples of the thermoplastic elastomer include an olefin-based thermoplastic elastomer (TPO); and a urethane-based thermoplastic elastomer (TPU).

Note that a person skilled in the art can distinguish between the thermoplastic resin and the thermoplastic elastomer. The thermoplastic resin usually exhibits a flexural modulus of 100 MPa or more. From the viewpoint of moldability of the expanded beads, the flexural modulus of the thermoplastic resin is preferably 3000 MPa or less, more preferably 2000 MPa or less, still more preferably 1500 MPa or less, and particularly preferably 1200 MPa or less. On the other hand, the thermoplastic elastomer exhibits rubber elasticity at normal temperature, and usually exhibits a flexural modulus of less than 100 MPa. Note that the flexural modulus of the thermoplastic polymer can be determined on the basis of JIS K7171:2008. From the viewpoint of excellent balance between moldability and physical properties of the expanded beads, the expanded beads of the present invention are preferably formed from a thermoplastic resin.

The expanded beads of the present invention may be formed from one kind of thermoplastic polymer or two or more kinds of thermoplastic polymers.

From the viewpoint that the cushioning property, compression recovery property, and lightness of a molded article of expanded beads obtained by in-mold molding the expanded beads of the present invention are more favorable, the expanded beads of the present invention preferably contain a polyolefin-based resin and more preferably contain a polypropylene-based resin. In 100% by mass of the thermoplastic polymer constituting the expanded beads of the present invention, the polypropylene-based resin is contained preferably in an amount of 70% by mass or more, more preferably in an amount of 90% by mass or more, and still more preferably in an amount of 95% by mass or more.

From the viewpoint of contributing to the achievement of the sustainable development goals (SDGs), the expanded beads of the present invention preferably contain a recycled-derived thermoplastic polymer. Here, the recycled-derived thermoplastic polymer widely includes an edge material generated at a production site at the time of production and a thermoplastic polymer recovered from a waste of a product exemplified by a used film/foamed molded article.

In recent years, there is a tendency that it is socially required to provide a product using a recycled-derived material. Therefore, a person who provides a final product to the market may wish to indicate that at least a part of the product contains a recycled-derived material.

However, in the technical field of the molded article of expanded beads, the manufacturer of the expanded beads may be different from the manufacturer who purchases the expanded beads and produces the molded article of expanded beads. In such a case, there is a problem in that it is difficult for a purchaser of the molded article of expanded beads (for example, a user) to confirm whether or not the expanded beads constituting the molded article of expanded beads are expanded beads containing a recycled-derived thermoplastic polymer.

On the other hand, in the expanded beads of the present invention according to an aspect containing a recycled-derived thermoplastic polymer, the expanded beads or the molded article of expanded beads formed using the expanded beads exhibits a light emission reaction derived from luminescent rare earth upon electromagnetic wave irradiation. Therefore, the user of the molded article of expanded beads may recognize in advance information that expanded beads containing a recycled-derived thermoplastic polymer, which is a material used, exhibit a predetermined light emission reaction upon electromagnetic wave irradiation. As a result, by detecting the light emission reaction by irradiating the obtained molded article of expanded beads with an electromagnetic wave, the user can identify that the molded article of expanded beads is produced using the expanded beads containing a recycled-derived thermoplastic polymer. That is, the aspect of the present invention enables tracking of the expanded beads containing a recycled-derived thermoplastic polymer.

Examples of the recycled-derived thermoplastic polymer include thermoplastic polymers derived from recycled materials exemplified by post-consumer materials and pre-consumer materials.

As defined in JIS Q14021:2000, a post-consumer material refers to a material that is discharged from the home or that occurs as a product that is no longer usable for its original purpose from commercial, industrial, and various facilities as an end user of the product. Materials returned from the distribution channel are included in the post-consumer material. As defined in JIS Q14021:2000, the pre-consumer material refers to a material taken out from a waste stream in a production process. For example, rework products, regrind products, and scrap that can be reused in the same process as the generation of the pre-consumer material are excluded from the pre-consumer material. In the present specification, recycled materials include rework products, regrind products, and scrap that can be reused in the same process as the generation of pre-consumer materials.

Thermoplastic polymers derived from these recycled materials are generally available as pellets obtained by collecting, pulverizing, and/or melting these recycled materials. For example, thermoplastic resins derived from post-consumer materials can be obtained as pellets obtained by collecting, pulverizing, and/or melting used thermoplastic resin foamed molded articles used by end users. Thermoplastic resins derived from post-consumer materials can be obtained as pellets obtained by collecting, pulverizing, and/or melting thermoplastic resins from automobile shredder residues generated in the process of discarding automobiles. Note that, in the present specification, the automobile shredder residue (ASR) means "automobile shredder residue" as defined in Article 2, Paragraph 5 of Act No. 87 of 2002 "Act on Recycling of End-of-Life Automobiles".

In the present invention, the expanded beads containing a recycled-derived thermoplastic polymer may be formed from only the recycled-derived thermoplastic polymer, or may be formed from a mixture of the recycled-derived thermoplastic polymer and a virgin thermoplastic polymer. In the present specification, the virgin thermoplastic polymer means a new thermoplastic polymer excluding a recycled material.

Note that the recycled-derived thermoplastic polymer may be the same polymer as the thermoplastic polymer described above except that the thermoplastic polymer is derived from the recycled material.

When the expanded beads of the present invention are formed from a mixture of a virgin thermoplastic polymer and a recycled-derived thermoplastic polymer, the mass ratio of the virgin thermoplastic polymer to the recycled-derived thermoplastic polymer in the expanded beads, i.e., the virgin thermoplastic polymer : the recycled-derived thermoplastic polymer is preferably 97 : 3 to 1 : 99, more preferably 95 : 5 to 10 : 90, still more preferably 90 : 10 to 30 : 70, and particularly preferably 85 : 15 to 50 : 50.

The expanded beads of the present invention may contain a polymer other than the thermoplastic polymer. Examples of the other polymer include thermosetting resins and rubbers. The content of the other polymer in the expanded beads is preferably 20% by mass or less, more preferably 10% by mass or less, still more preferably 5% by mass or less, particularly preferably 3% by mass or less, and most preferably 0, that is, the expanded beads most preferably contain substantially only a thermoplastic polymer as a polymer.

(Luminescent rare earth elements)

The expanded beads of the present invention exhibit a light emission reaction derived from luminescent rare earth elements upon electromagnetic wave irradiation. In other words, the expanded beads of the present invention contain luminescent rare earth elements together with the thermoplastic polymer described above. The expanded beads of the present invention can be identified by the light emission reaction exhibited by irradiation with electromagnetic waves.

The light emission reaction is derived from, for example, one or more luminescent rare earth elements selected from the group consisting of praseodymium (Pr), cerium (Ce), neodymium (Nd), samarium (Sm), europium (Eu), terbium (Tb), dysprosium (Dy), holmium (Ho), erbium (Er), and thulium (Tm).

In other words, the expanded beads of the present invention may contain, as the luminescent rare earth element, one or more elements selected from the group consisting of praseodymium (Pr), cerium (Ce), neodymium (Nd), samarium (Sm), europium (Eu), terbium (Tb), dysprosium (Dy), holmium (Ho), erbium (Er), and thulium (Tm). The expanded beads of the present invention more preferably contain, as the luminescent rare earth element, one or more elements selected from the group consisting of praseodymium (Pr), neodymium (Nd), samarium (Sm), europium (Eu), terbium (Tb), dysprosium (Dy), holmium (Ho), erbium (Er), and thulium (Tm).

Note that, in the present invention, the luminescent rare earth element may be an element alone or may be used as a composite containing a luminescent rare earth element as long as the luminescent rare earth element exhibits a light emission reaction at least upon electromagnetic wave irradiation.

It is useful to directly or indirectly recognize information on what emission spectrum the light emission reaction in the expanded beads of the present invention exhibits. The expanded beads of the present invention can be identified as follows based on such recognition.

That is, the expanded beads of the present invention are expanded beads containing a thermoplastic polymer and a luminescent rare earth element component that emits light upon electromagnetic wave irradiation and shows a specific emission spectrum. Such expanded beads of the present invention can be identified as expanded beads containing the luminescent rare earth elements by collating an emission spectrum detected by irradiating the expanded beads with electromagnetic waves with a preset reference emission spectrum showing a light emission reaction derived from luminescent rare earth elements. Details of this identification method will be described later.

Here, directly recognizing information indicating what emission spectrum the light emission reaction exhibits means directly acquiring the actual light intensity and wavelength pattern of the emission spectrum. On the other hand, indirectly recognizing the information means that expanded beads can be mechanically identified using a system exemplified by a collation system in which a pattern of a reference emission spectrum is recorded in a collatable manner.

Note that, in the present specification, the luminescent rare earth element or the composite containing a luminescent rare earth element may be collectively referred to as a luminescent rare earth element component. Examples of the luminescent rare earth element component include taggant particles described later.

As one aspect of the present invention, the expanded beads of the present invention may include taggant particles containing luminescent rare earth elements. In the present invention, the taggant particle is a luminescent rare earth element component, and is a particulate identifier that enables discrimination by a light emission reaction. From the viewpoint that the light emission reaction is stably likely to occur, the taggant particles are preferably a composite containing luminescent rare earth element. However, taggants as the identifier are not necessarily limited to particles.

The shape of the taggant particles is not particularly limited, and can take various shapes such as a spherical shape, an elliptical spherical shape (egg shape), a columnar shape, a prismatic shape, a pellet shape, and a granular shape. As one aspect of the taggant particles, for example, the taggant particles are microparticulate powders having an average particle diameter of 0.1 $\mu$m or more and 100 $\mu$m or less and preferably 1 $\mu$m or more and 50 $\mu$m or less. In this case, it is easy to more uniformly disperse the microparticulate taggant particles in the thermoplastic polymer constituting the expanded beads, and the detection accuracy of the light emission reaction can be further improved. Note that the average particle diameter of taggant particles is a value measured by the following method. First, the taggant particles are observed using a scanning electron microscope, and an image is photographed. The area (projected area) of the particle is measured by analyzing the image, and the diameter of an imaginary perfect circle having the same area as the area is taken as the particle diameter of the particle. This measurement is performed on 100 or more particles, and the arithmetic mean thereof is taken as the average particle diameter of the taggant particles.

Examples of the taggant particles as a particulate composite containing a luminescent rare earth element component include a crystalline ligand obtained by a reaction between a luminescent rare earth element and an unsaturated organic ligand, and a crystalline ligand obtained by a reaction between a luminescent rare earth element, a non-luminescent rare earth element, and an unsaturated organic ligand. More specifically, the crystalline ligand is a composite obtained by coordinating one or two or more luminescent rare earth elements to an unsaturated organic ligand. Examples of the unsaturated organic ligand include a phthalate, an isophthalate, a terephthalate, a trimesate, a trimellitate, a pyromellitate, and a mellitate.

The taggant particles as the composite are advantageous in that very various emission spectra can be realized by designing the type and combination of the luminescent rare earth elements to be used. For example, a specific emission spectrum exhibited when a molded product formed from a polymer composition having a predetermined composition and including certain taggant particles is irradiated with an electromagnetic wave having a specific wavelength, and one or more pieces of information selected from the property of a material constituting the expanded beads, physical property information of expanded beads exemplified by apparent density of the expanded beads, production condition information exemplified by a production lot number and a production date, and source information exemplified by a producer may be associated in advance. The molded product is preferably expanded beads or a molded article of expanded beads. As a result, the taggant particles can more effectively exhibit a function as a particulate identifier that enables identification by a light emission reaction. Specifically, information associated in advance by a second identification method described later can be acquired from expanded beads including the taggant particles or a molded article thereof.

When the crystalline ligand is irradiated with an electromagnetic wave, light energy is transmitted to the luminescent rare earth element via the organic ligand contained in the composite. As a result, the luminescent rare earth element is in an excited state, and then a light emission reaction occurs in which light having a predetermined wavelength such as visible light is emitted, and the luminescent rare earth element returns to the ground state.

In order to maximize the energy of the electromagnetic wave transmitted to the luminescent rare earth element via the organic ligand, the organic ligand is preferably selected to have a structure exhibiting optimal absorption in a range of the wavelength of the electromagnetic wave selected for excitation. In other words, the electromagnetic wave may be selected from a range of wavelengths that can be optimally absorbed by the organic ligand contained in the composite.

From the viewpoint that a light emission reaction upon electromagnetic wave irradiation is easily detected and the moldability of the expanded beads is hardly deteriorated, the content Ctt of the taggant particles in the expanded beads of the present invention is preferably 0.0001% by mass or more and 0.5% by mass or less, more preferably 0.0005% by mass or more and 0.1% by mass or less, still more preferably 0.001% by mass or more and 0.05% by mass or less, and 0.002% by mass or more and particularly preferably 0.03% by mass or less.

In other words, from the viewpoint that a light emission reaction is more easily detected, the lower limit of the content Ctt is more preferably 0.0005% by mass or more, still more preferably 0.001% by mass or more, and particularly preferably 0.002% by mass or more.

On the other hand, from the viewpoint of further suppressing an increase in cost due to the use of the taggant particles containing expensive luminescent rare earth elements, the viewpoint of providing expanded beads having more excellent moldability, and the viewpoint of providing expanded beads having more excellent uniformity of the cell diameter, the upper limit of the content Ctt is more preferably 0.1% by mass or less, still more preferably 0.05% by mass or less, and particularly preferably 0.03% by mass or less.

As the composite containing a luminescent rare earth element, for example, JP 2006-249075 A, JP 2022-187940 A, US 2010/0207067, and the like are referred to.

(Electromagnetic wave)

The electromagnetic wave used for causing the luminescent rare earth element to emit light may be appropriately selected depending on the type or combination of the luminescent rare earth elements contained in the expanded beads.

Examples of the electromagnetic wave include light rays such as infrared rays, visible rays, and ultraviolet rays, X-rays, and gamma rays. Light rays are preferably used as electromagnetic waves from the viewpoint of easy handling and easy use, and in particular, ultraviolet rays are more preferably used. In other words, taggant particles exhibiting a light emission reaction by the light rays are preferable in the present invention. The irradiated light ray may have a single wavelength having a single wavelength, or may have a broad wavelength indicating a plurality of wavelengths.

Among them, it is particularly preferable that the expanded beads of the present invention do not exhibit a light emission reaction when irradiated with visible rays, and exhibit a light emission reaction when irradiated with ultraviolet rays. In this case, the taggant particles formed from the luminescent rare earth elements are not visible to the naked eye by visible rays, so that the aesthetic appearance of the molded article of expanded beads is prevented from being impaired.

(Form of expanded beads)

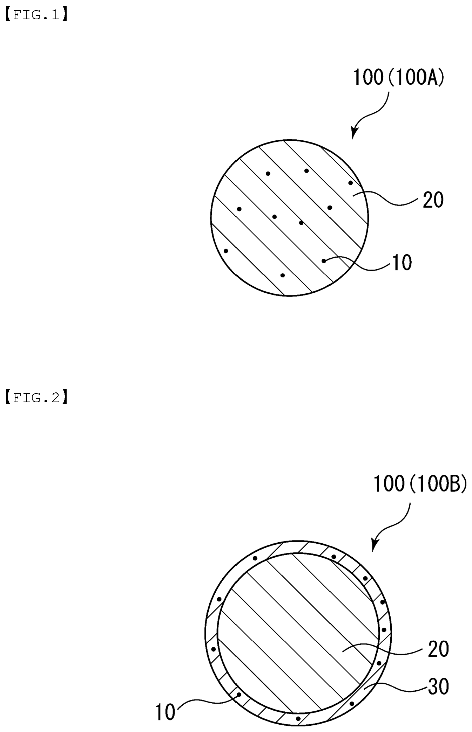

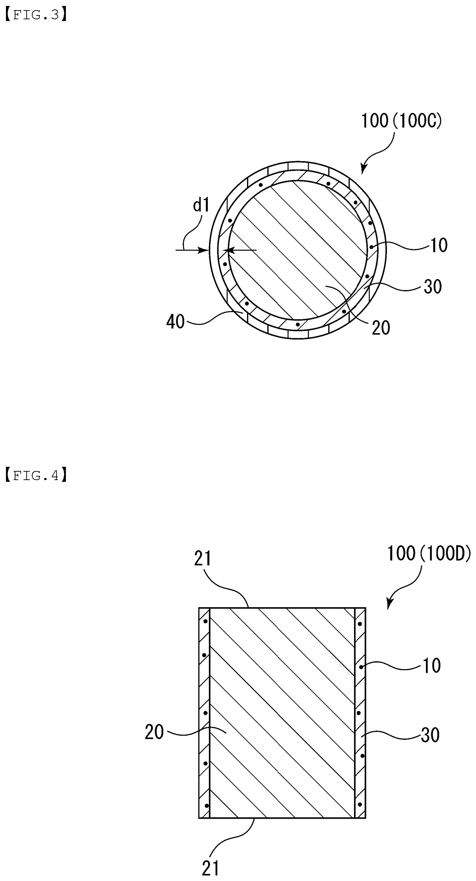

Next, the configuration and form of the expanded beads of the present invention will be described with reference to Figs. 1 to 4. The shape of the expanded beads is not particularly limited, and can take various shapes such as a spherical shape, an elliptical shape, a columnar shape, and a cylindrical shape. Figs. 1 to 3 are schematic cross-sectional views showing a cross section cut through the center of a spherical expanded bead 100, and Fig. 4 is a schematic cross-sectional view taken along the axial direction of the expanded bead 100 of a two-layer columnar type.

The configuration and form of the expanded beads of the present invention can be appropriately designed within a range not hindering the object and effect of the present invention, but as described below, there are several desirable configurations and forms.

An expanded bead 100A shown in Fig. 1 is spherical and has a single layer. That is, the expanded bead 100A is entirely formed from the foamed layer 20, and the taggant particles 10 are dispersed therein. The single-layer expanded bead 100A is advantageous in that production is easily performed and the weight is easily reduced. However, the expanded beads of the present invention are not limited to a single-layer aspect. Examples of the expanded beads of the present invention having a multilayer structure will be described below with reference to Figs. 2 to 4.

The expanded bead 100 (100B, 100C, 100D) shown in Figs. 2 to 4 has a multilayer structure having a foamed layer 20 formed from a thermoplastic polymer and a polymer layer 30 formed from a polymer. As described later, the expanded beads having a multilayer structure are more preferable because they exhibit various advantageous points.

In such a multilayer structure, the ratio [Ctr/Ctt] of the content Ctr of the taggant particles 10 in the polymer layer 30 to the content Ctt of the taggant particles 10 in the expanded bead 100 is preferably 2 or more, more preferably 5 or more, still more preferably 10 or more, and particularly preferably 20 or more. By allowing the polymer layer 30 to contain a relatively large amount of the taggant particles 10 as described above, the concentration of the taggant particles 10 in the polymer layer 30 can be locally increased while maintaining the content Ctt of the taggant particles 10 in the entire expanded bead 100 low. As a result, in the polymer layer 30 of the multilayer expanded bead 100, the collision probability between the irradiated electromagnetic wave and the taggant particles 10 is increased, and the light emission reaction can be efficiently generated. By allowing the polymer layer 30 to contain a relatively large amount of the taggant particles 10, it is easy to suppress adverse effects of the taggant particles 10 on the foamed state of the foamed layer 20, and more uniform cells are easily formed in the foamed layer 20. From the viewpoint of suppressing inhibition of the fusion-bonding property of the expanded beads, the upper limit of the ratio [Ctr/Ctt] is preferably 100 or less, more preferably 80 or less, still more preferably 50 or less, and particularly preferably 35 or less. In other words, the ratio [Ctr/Ctt] is preferably 2 or more and 100 or less, more preferably 5 or more and 80 or less, still more preferably 10 or more and 50 or less, and particularly preferably 20 or more and 35 or less.

Note that, regarding the expanded beads of the present invention, the content of the taggant particles refers to the ratio (% by mass) of the mass of the taggant particles contained in the expanded beads to the mass of the expanded beads.

An aspect in which the content Ctt of the taggant particles in the multilayer expanded bead 100 is 0.0001% by mass or more and 0.5% by mass or less and the ratio [Ctr/Ctt] of the content Ctr of the taggant particles 10 in the polymer layer 30 to the content Ctt of the taggant particles 10 in the expanded bead 100 is 2 or more is excellent in terms of suppressing the use amount of the taggant particles 10 and enhancing the efficiency of the light emission reaction without inhibiting the foamed state of the expanded bead 100.

As described above, in the multilayer structure, it is particularly preferable that the following aspect is further added to the expanded beads in which the ratio [Ctr/Ctt] of the content Ctr of the taggant particles 10 in the polymer layer 30 to the content Ctt of the taggant particles 10 in the expanded bead 100 is 2 or more. That is, from the viewpoint that the content of the taggant particles 10 in the polymer layer 30 can be sufficiently increased and the light emission reaction can be efficiently caused, in addition to the above aspect, the mass ratio of the polymer layer 30 in the expanded bead 100 is preferably 0.5% by mass or more and 15% by mass or less, more preferably 1% by mass or more and 10% by mass or less, and still more preferably 2% by mass or more and 8% by mass or less.

The foamed layer 20 in the expanded beads 100B, 100C, and 100D may or may not include the taggant particles 10. However, from the viewpoint of maintaining the foamed state of the foamed layer 20 in a good state and reducing the use amount of the taggant particles 10 to enhance the economic efficiency, the content of the taggant particles 10 in the foamed layer 20 is preferably 0.1% by mass or less, more preferably 0.01% by mass or less, still more preferably 0.001% by mass or less, particularly preferably 0.0001% by mass or less, and most preferably 0, that is, it is most preferable that the foamed layer 20 does not contain the taggant particles 10.

Here, as shown in Fig. 2, examples of the expanded bead 100 having a multilayer structure include an expanded bead 100B having a spherical shape, including a foamed layer 20 as a core layer and a polymer layer 30 as a covering layer covering the foamed layer 20, the polymer layer 30 being located on a surface of the expanded bead.

As another aspect, as shown in Fig. 3, the expanded bead 100C having a spherical shape and including a foamed layer 20 as a core layer, an outermost surface layer 40 provided on a surface of the expanded bead, and a polymer layer 30 as an intermediate layer located between the foamed layer 20 and the outermost surface layer 40 is exemplified. The outermost surface layer 40 can be formed from any material, and can be formed from, for example, a foamed thermoplastic polymer or a non-foamed thermoplastic polymer. In order to sufficiently generate a light emission reaction in the polymer layer 30 as an intermediate layer, the outermost surface layer 40 is preferably a layer that easily transmits an electromagnetic wave, and more preferably a layer that easily transmits an ultraviolet ray or visible light which is preferably selected as an electromagnetic wave. For example, the outermost surface layer 40 may be formed from a polymer or the like exhibiting transparency or white color.

As another aspect, as shown in Fig. 4, there is an example of an expanded bead 100D having a columnar shape, including a foamed layer 20 as a core layer and a polymer layer 30 as a covering layer covering a side peripheral surface of the foamed layer 20, the polymer layer 30 being located on a surface of the expanded bead. Fig. 4 shows an aspect in which the polymer layer 30 is provided on the entire circumferential surface in the length direction of the expanded bead 100D, and the foamed layer 20 is exposed at an end surface 21 in the length direction. However, as a modification, in the expanded bead 100D, the polymer layer 30 may cover the entire foamed layer 20 including the end surface 21.

Note that, although not shown, the expanded beads of the present invention are not limited to the aspect in which the polymer layer is provided on the surface side of the foamed layer, and include an aspect in which the polymer layer is provided closer to the center side of the expanded bead than the foamed layer.

Figs. 2 and 3 show the aspect in which the polymer layer 30 as a covering layer covers the entire foamed layer 20, but the present invention includes an aspect in which the polymer layer 30 partially covers the foamed layer 20 as long as the object and effect of the present invention are not impaired, for example, as in the case of the expanded bead 100D shown in Fig. 4.

From the viewpoint of enhancing the detection accuracy of the light emission reaction, it is preferable that the expanded bead 100 having a multilayer structure including the polymer layer 30 covering the foamed layer 20 includes the foamed layer 20 and the polymer layer 30 covering 30% or more of the surface area of the foamed layer 20. From the same viewpoint, the polymer layer 30 more preferably covers 50% or more of the surface of the foamed layer 20, and still more preferably covers 70% or more of the surface of the foamed layer 20.

In the multilayer expanded bead 100 described above, particularly the expanded beads 100B and 100D in which the polymer layer 30 is located on the surface of the expanded bead can efficiently absorb the energy of the irradiated electromagnetic wave into the taggant particles 10 contained in the polymer layer 30. Therefore, in the expanded beads 100B and 100D, a light emission reaction occurs well, and as a result, an emission spectrum in the light emission reaction can be detected with high accuracy.

However, even in an aspect in which the polymer layer 30 does not appear on the surface of the expanded bead 100 as in the expanded bead 100C, when the polymer layer 30 is provided near the surface of the multilayer expanded bead 100, it is possible to cause the taggant particles 10 contained in the polymer layer 30 to efficiently absorb the energy of the irradiated electromagnetic wave similarly to the expanded beads 100B and 100D. That is, the polymer layer 30 is preferably provided on the surface or near the surface of the multilayer expanded bead 100. The fact that the polymer layer 30 is provided near the surface of the multilayer expanded bead 100 means that at least a part of the polymer layer 30 is located in a region d1 up to a depth of 1000 $\mu$m in the center direction from the surface of the multilayer expanded bead 100, for example, as shown in Fig. 3.

In the multilayer expanded bead 100 including the foamed layer 20 and the polymer layer 30, from the viewpoint that the light emission reaction of the expanded bead 100 is efficiently generated and the detection accuracy can be improved, the content Ctr of the taggant particles 10 in the polymer layer 30 is preferably 0.001% by mass or more, more preferably 0.005% by mass or more, still more preferably 0.01% by mass or more, and particularly preferably 0.02% by mass or more. On the other hand, from the viewpoint of obtaining expanded beads excellent in moldability without inhibiting the fusion-bonding property of the expanded beads, the content Ctr of the taggant particles 10 in the polymer layer 30 is preferably 5% by mass or less, more preferably 1% by mass or less, still more preferably 0.5% by mass or less, and particularly preferably 0.1% by mass or less.

In other words, the content Ctr of the taggant particles 10 in the polymer layer 30 is preferably 0.001% by mass or more and 5% by mass or less, more preferably 0.005% by mass or more and 1% by mass or less, still more preferably 0.01% by mass or more and 0.5% by mass or less, and particularly preferably 0.02% by mass or more and 0.1% by mass or less.

In the expanded bead 100, it is still more preferable that (i) the ratio [Ctr/Ctt] of the content Ctr of the taggant particles 10 in the polymer layer 30 to the content Ctt of the taggant particles 10 in the expanded bead 100 including the foamed layer 20 and the polymer layer 30 is 2 or more, and (ii) the content Ctr of the taggant particles 10 in the polymer layer 30 is 0.001% by mass or more and 5% by mass or less.

According to such an aspect, it is possible to increase the concentration of the taggant particles 10 in the polymer layer 30 while suppressing the use amount of the taggant particles 10 in the entire expanded bead 100. As a result, it is possible to efficiently cause the light emission reaction of the expanded bead 100 while maintaining the foamed state of the expanded bead 100 better, and to enhance the detection accuracy. In the expanded bead 100 of such an aspect, the fusion-bonding property between the expanded beads at the time of producing a molded article of expanded beads is hardly inhibited and moldability is excellent.

In the expanded bead 100, in addition to (i) and (ii), (iii) the content Ctt of the taggant particles 10 in the expanded bead 100 is preferably 0.0001% by mass or more and 0.5% by mass or less. The expanded bead 100 of such an aspect is excellent from the viewpoint of moldability, generation of a remarkable light emission reaction, and suppression of the use amount of the taggant particles 10. In the expanded bead 100 of such an aspect, the fusion-bonding property between the expanded beads at the time of producing a molded article of expanded beads is hardly inhibited and moldability is excellent.

In the expanded bead 100, in addition to (i), (ii), and (iii), (iv) the polymer layer 30 is preferably located on the surface of the expanded bead 100. According to such an aspect, it is possible to increase the concentration of the taggant particles 10 in the polymer layer 30 located on the surface while suppressing the use amount of the taggant particles 10 in the entire expanded bead 100. As a result, it is possible to more efficiently cause the light emission reaction of the expanded bead 100 while maintaining the foamed state of the expanded bead 100 in a good state, and to remarkably enhance the detection accuracy. In the expanded bead 100 of such an aspect, the fusion-bonding property between the expanded beads at the time of producing a molded article of expanded beads is hardly inhibited and moldability is excellent.

Note that the thermoplastic polymer constituting the foamed layer 20 in the multilayer expanded bead 100 can be appropriately selected from various thermoplastic polymers used for constituting the thermoplastic polymer expanded beads described above.

The polymer constituting the polymer layer 30 is not limited to a thermoplastic polymer. As the polymer constituting the polymer layer 30, the same polymer as the thermoplastic polymer constituting the foamed layer 20 may be used, or a different polymer may be used. The method of obtaining the multilayer expanded beads including the polymer layer 30 covering the foamed layer 20 described above is not particularly limited. In the production of thermoplastic polymer particles described later, examples of the method include a method of obtaining polymer particles in which a covering layer is laminated on the surface of a core layer by coextrusion using an extruder and foaming at least the core layer of the polymer particles, and a method of obtaining single-layer expanded beads and coating a surface of the single-layer expanded beads with a powdery polymer.

The polymer layer 30 located on the surface of the expanded bead 100 preferably has the following aspect from the viewpoint of improving the fusion-bonding property between the expanded beads at the time of producing a molded article of expanded beads. That is, the polymer constituting the polymer layer 30 is preferably a thermoplastic polymer. The melting point or softening point of the polymer constituting the polymer layer 30 is preferably lower than the melting point of the thermoplastic polymer constituting the foamed layer 20. By realizing such a temperature relationship, the fusion-bonding property between the expanded beads is hardly inhibited even when the content of the taggant particles 10 contained in the polymer layer 30 is relatively large. From such a viewpoint, the melting point Tms of the thermoplastic polymer constituting the polymer layer 30 is, for example, preferably lower than the melting point Tmc of the thermoplastic polymer constituting the foamed layer 20. That is, $Tms < Tmc$ is preferable. Even when the content of the taggant particles 10 contained in the polymer layer 30 is relatively large, from the viewpoint of sufficiently enhancing the fusion-bonding property between the expanded beads, $Tmc - Tms \geq 3°C$ is preferable, $Tmc - Tms \geq 5°C$ is more preferable, and $Tmc - Tms \geq 8°C$ is still more preferable. From the viewpoint of suppressing peeling between the foamed layer 20 and the polymer layer 30, $Tmc - Tms \leq 35°C$ is preferable, $Tmc - Tms \leq 20°C$ is more preferable, and $Tmc - Tms \leq 15°C$ is still more preferable.

In other words, in the present invention, $Tmc - Tms$ is preferably 3°C or higher and 35°C or lower, more preferably 5°C or higher and 20°C or lower, and still more preferably 8°C or higher and 15°C or lower.

The melting point Tmc of the thermoplastic polymer constituting the foamed layer 20 is approximately 100°C or higher and 250°C or lower, preferably 110°C or higher and 200°C or lower, more preferably 120°C or higher and 180°C or lower, and still more preferably 140°C or higher and 160°C or lower, depending on the type of the thermoplastic polymer constituting the foamed layer 20. The melting point Tms of the thermoplastic polymer constituting the polymer layer 30 is approximately 80°C or higher and 180°C or lower, preferably 100°C or higher and 150°C or lower, and more preferably 105°C or higher and 140°C or lower.

The combination of the thermoplastic polymer constituting the foamed layer 20 and the thermoplastic polymer constituting the polymer layer 30 is not particularly limited, but it is preferable that the thermoplastic polymer constituting the foamed layer 20 is a polyolefin-based resin and the thermoplastic polymer constituting the polymer layer 30 is a polyolefin-based resin. In this case, a difference [Tmc - Tms] between a melting point Tmc of the polyolefin-based resin constituting the foamed layer and a melting point Tms of the polyolefin-based resin constituting the polymer layer is preferably 3°C or more and 35°C or less.

The melting point of the thermoplastic polymer is determined on the basis of JIS K7121:1987. Specifically, "(2) Case of measuring the melting temperature after performing a constant heat treatment" is adopted as state adjustment, and the state is adjusted at a heating rate and a cooling rate of 10°C/min. A DSC curve is obtained by heating the test piece after state adjustment from 30°C to 200°C at a heating rate of 10°C/min, and the peak top temperature of the melting peak in the DSC curve is defined as the melting point. Note that, when a plurality of melting peaks appear in the DSC curve, the peak top temperature of the melting peak having the largest area is taken as the melting point.

The polymer layer 30 may be in a foamed state or a non-foamed state. From the viewpoint of further enhancing the detection accuracy of the taggant particles 10 contained in the polymer layer 30, the polymer layer 30 is preferably in a substantially non-foamed state. The substantially non-foamed state includes a state in which the polymer layer 30 is not foamed and does not contain cells and a state in which cells disappear after foaming, and means that there is almost no cell structure.

The fact that the rare earth elements are contained in the expanded beads can be confirmed by a known elemental analysis method exemplified by, for example, inductively coupled plasma mass spectrometry (ICP-MS) and X-ray fluorescence elemental analysis (XRF). From the viewpoint of cost reduction and further ensuring the light emission reaction, the content of the luminescent rare earth elements in the expanded beads is preferably 0.4 ppm or more and 2000 ppm or less, more preferably 2 ppm or more and 400 ppm or less, still more preferably 4 ppm or more and 200 ppm or less, and particularly preferably 4 ppm or more and 120 ppm or less. The content of the luminescent rare earth elements in the expanded beads is measured by performing inductively coupled plasma mass spectrometry (ICP-MS) using expanded beads as a sample.

From the same viewpoint, the content of the luminescent rare earth elements in the polymer layer in the expanded beads provided with the foamed layer and the polymer layer is preferably 4 ppm or more and 12500 ppm or less, more preferably 12 ppm or more and 4000 ppm or less, still more preferably 40 ppm or more and 1250 ppm or less, and particularly preferably 40 ppm or more and 400 ppm or less. The content of the luminescent rare earth elements in the polymer layer can be measured in the same manner as in the measurement of the content of the luminescent rare earth elements in the expanded beads except that the polymer layer is used as a measurement sample.

The content of the taggant particles in the expanded beads can be calculated from the content of the luminescent rare earth elements in the expanded beads, for example, by grasping the composition of the taggant particles contained in the expanded beads in advance. Grasping the composition of the taggant particles in advance means, for example, grasping the composition, that is, the types and component ratios of luminescent rare earth elements and unsaturated organic ligands in advance by a method exemplified by chemical analysis when the taggant particles are crystalline ligands obtained by a reaction between luminescent rare earth elements and unsaturated organic ligands.

(Carbon particles)

The expanded beads of the present invention may contain carbon particles. For example, carbon particles that are black pigments may be contained in order to provide a black molded article of expanded beads. The carbon particles are added, for example, for the purpose of imparting a black color to the expanded beads or imparting functionality exemplified by conductivity.

When the carbon particles are contained, the content Cct of the carbon particles in the expanded beads is preferably 0.01% by mass or more and 15% by mass or less, more preferably 0.1% by mass or more and 12% by mass or less, still more preferably 1% by mass or more and 10% by mass or less, particularly preferably 1.5% by mass or more and 5% by mass or less, and most preferably 2% by mass or more and 4% by mass or less. In particular, when the carbon particles are black pigments, the numerical range has the following effects.

That is, when the content Cct of the carbon particles in the expanded beads is 0.01% by mass or more, it is possible to obtain a molded article of expanded beads having a high degree of blackness such that, for example, the L* value is 30 or less. A molded article of expanded beads having a high degree of blackness gives a luxurious feeling to the molded article, and thus is preferable from the viewpoint of aesthetic appearance. From such a viewpoint, the content Cct of the carbon particles is preferably 0.01 mass or more, more preferably 0.1% by mass or more, still more preferably 1% by mass or more, particularly preferably 1.5% by mass or more, and most preferably 2% by mass or more. On the other hand, in order to prevent a decrease in detection accuracy of the light emission reaction of the expanded beads due to the carbon particles, the content Cct of the carbon particles in the expanded beads is preferably 15% by mass or less. In other words, the expanded beads of the present invention in which the content Cct of the carbon particles is adjusted to fall within the above range can be identified by the light emission reaction while exhibiting a black color. From such a viewpoint, the content Cct of the carbon particles is preferably 15% by mass or less, more preferably 12% by mass or less, still more preferably 10% by mass or less, particularly preferably 5% by mass or less, and most preferably 4% by mass or less.

From the viewpoint that the obtained molded article has a high degree of blackness and a light emission reaction can be detected with higher accuracy, it is preferable to use expanded beads which include a foamed layer formed from a thermoplastic polymer and a polymer layer covering the foamed layer and in which the ratio [Ctr/Ctt] of the content Ctr of the taggant particles in the polymer layer to the content Ctt of the taggant particles in the expanded beads is 2 or more and the content Cct of the carbon particles is 0.01% by mass or more and 15% by mass or less. In particular, it is more preferable that the polymer layer is provided on the surface or near the surface of the expanded beads, and the content of the carbon particles in the expanded beads is in the above range. As a result, expanded beads exhibiting a black appearance and having good identifiability by a light emission reaction are provided.

According to the study on the present invention, it has been considered that, for example, when carbon particles are contained in expanded beads in order to obtain a molded article of expanded beads having a high degree of blackness, at least a part of an electromagnetic wave irradiated for identifying the expanded beads or light generated by the electromagnetic wave irradiation is absorbed by the carbon particles, and the detection accuracy of light tends to decrease. However, according to the above aspect of the present invention in which taggant particles are contained in the polymer layer, even when carbon particles are blended, it is possible to provide expanded beads which suppress inhibition of a light emission reaction of the expanded beads, exhibit a black appearance, and have good identifiability by the light emission reaction.

When the expanded beads of the present invention are multilayer expanded beads provided with a foamed layer and a polymer layer, it is preferable that the carbon particles are contained in both the foamed layer and the polymer layer, and the taggant particles are contained in the polymer layer. The content of the carbon particles in the foamed layer and the polymer layer is preferably within the same range as the content of the carbon particles in the expanded beads. As a result, expanded beads having good identifiability by a light emission reaction and exhibiting a beautiful black appearance with suppressed color unevenness are provided.

Carbon particles that are black pigments refer to particles composed of and containing carbon, and examples thereof include one or more materials selected from carbon black, conductive carbon, carbon nanotubes, graphene, graphite, activated carbon, and the like. Among them, carbon black is preferable from the viewpoint of excellent balance between dispersibility in a polymer such as a resin and cost. Examples of the carbon black include channel black, roller black, furnace black, thermal black, acetylene black, and ketjen black.

The expanded beads of the present invention may appropriately contain an optional additive as long as the object and effect of the present invention are not impaired. Examples of the optional additive include a flame retardant, a flame retardant auxiliary, a cell controlling agent, a lubricant, a crystal nucleating agent, a conductive filler, and an antistatic agent.

(Average cell diameter)

The expanded beads of the present invention are produced by foaming polymer particles as a raw material, and have a cell structure including a large number of cells.

From the viewpoint of improving the moldability of the expanded beads, the average cell diameter in the expanded beads of the present invention is preferably 20 $\mu$m or more, more preferably 30 $\mu$m or more, still more preferably 50 $\mu$m or more, and particularly preferably 80 $\mu$m or more.

On the other hand, from the viewpoint of improving the surface smoothness of the molded article, the average cell diameter in the expanded beads of the present invention is preferably 250 $\mu$m or less, more preferably 200 $\mu$m or less, still more preferably 180 $\mu$m or less, and preferably 150 $\mu$m or less.

In other words, the cell diameter is preferably 20 $\mu$m or more and 250 $\mu$m or less, more preferably 30 $\mu$m or more and 200 $\mu$m or less, still more preferably 50 $\mu$m or more and 180 $\mu$m or less, and particularly preferably 80 $\mu$m or more and 150 $\mu$m or less.

The average cell diameter of the expanded beads is determined as follows.

First, the expanded beads are cut at a position where the volume of the expanded beads is bisected. Next, a photograph of the cross section is taken so that the exposed cross section is entirely within the field of view. On the captured photograph, four line segments from the outermost surface of the expanded beads to the opposite outermost surface through the central portion are drawn so that the angles formed by the adjacent line segments are equal. That is, the line segments are drawn so that the angle formed by the adjacent line segments is 45°. The value (L/N) obtained by dividing the total length L of the four line segments thus obtained by the number N of all cells in contact with the line segment is taken as the average cell diameter in one expanded bead. This operation is performed on 10 or more expanded beads, and the arithmetic mean thereof is taken as the average cell diameter of the expanded beads.

When a molded article of expanded beads is produced by in-mold molding the expanded beads of the present invention, from the viewpoint of easily exhibiting excellent moldability and the viewpoint of easily obtaining a molded article with less color unevenness, it is preferable that the average cell diameter of the thermoplastic polymer expanded beads is 20 $\mu$m or more and 250 $\mu$m or less and the coefficient of variation in the cell diameter is 30% or less, it is more preferable that the average cell diameter of the thermoplastic polymer expanded beads is 30 $\mu$m or more and 200 $\mu$m or less and the coefficient of variation in the cell diameter is 25% or less, it is still more preferable that the average cell diameter of the thermoplastic polymer expanded beads is 50 $\mu$m or more and 180 $\mu$m or less and the coefficient of variation in the cell diameter is 20% or less, and it is still more preferable that the average cell diameter of the thermoplastic polymer expanded beads is 80 $\mu$m or more and 150 $\mu$m or less and the coefficient of variation in the cell diameter is 15% or less. The expanded beads having such a preferable configuration are easily realized by, for example, expanded beads which include a foamed layer formed from a thermoplastic polymer and a polymer layer and in which the content Ctt of the taggant particles in the expanded beads is 0.0001% by mass or more and 0.5% by mass or less, and the ratio [Ctr/Ctt] of the content Ctr of the taggant particles in the polymer layer to the content Ctt of the taggant particles in the expanded beads is 2 or more. In the above-described aspect of the expanded beads having a high degree of blackness, the polymer layer is more preferably a covering layer covering the foamed layer. This is because when the polymer layer in which the taggant particles are concentrated is provided on the surface side of the expanded beads, a light emission reaction is satisfactorily detected.

In the expanded beads of the present invention in which the content Cct of the carbon particles in the expanded beads is 0.01% by mass or more and 15% by mass or less, the average cell diameter of the thermoplastic polymer expanded beads is 20 $\mu$m or more and 250 $\mu$m or less, and the coefficient of variation in the cell diameter is 30% or less, moldability is excellent, and a molded article of expanded beads having a black appearance and small color unevenness is easily obtained. The reason why color unevenness is easily suppressed by the small coefficient of variation in the cell diameter is considered to be because the thickness of the cell membrane tends to be more uniform. From such a viewpoint, it is more preferable that the content Cct of the carbon particles in the expanded beads is 0.01% by mass or more and 15% by mass or less, the average cell diameter of the thermoplastic polymer expanded beads is 30 $\mu$m or more and 200 $\mu$m or less, and the coefficient of variation in the cell diameter is 25% or less, it is still more preferable that the average cell diameter of the thermoplastic polymer expanded beads is 50 $\mu$m or more and 180 $\mu$m or less and the coefficient of variation in the cell diameter is 20% or less, and it is particularly preferable that the average cell diameter of the thermoplastic polymer expanded beads is 80 $\mu$m or more and 150 $\mu$m or less and the coefficient of variation in the cell diameter is 15% or less.

The expanded beads of the present invention having a black appearance described above are easily realized by, for example, expanded beads in which the content Cct of the carbon particles in the expanded beads is 0.01% by mass or more and 15% by mass or less, a foamed layer formed from a thermoplastic polymer and a polymer layer are provided, the content Ctt of the taggant particles in the expanded beads is 0.0001% by mass or more and 0.5% by mass or less, and the ratio [Ctr/Ctt] of the content Ctr of the taggant particles in the polymer layer to the content Ctt of the taggant particles in the expanded beads is 2 or more. In the above-described aspect of the expanded beads having a high degree of blackness, the polymer layer is more preferably a covering layer covering the foamed layer. This is because when the polymer layer in which the taggant particles are concentrated is provided on the surface side of the expanded beads, a light emission reaction is satisfactorily detected.

In order to enhance the detection accuracy of the light emission reaction of the expanded beads, when a relatively large amount of taggant particles are blended in the expanded beads, the taggant particles can also act as a nucleus point for cell formation. Therefore, the foamed state of the expanded beads may be impaired, and the coefficient of variation in the cell diameter may be increased, for example. In particular, in the case of black expanded beads containing carbon particles, it is necessary to blend a larger amount of taggant particles, and thus there is a possibility that the foamed state of the expanded beads is easily impaired. On the other hand, according to the aspect of the present invention including a polymer layer containing taggant particles, in the expanded beads, the taggant particles can be present locally in the polymer layer. Therefore, in the present invention, there is no possibility that the foamed state of the expanded beads is impaired, and the expanded beads having good identifiability by a light emission reaction are favorably provided.

The coefficient of variation can be determined by dividing the standard deviation of the cell diameter of the expanded beads by the average cell diameter of the expanded beads and multiplying the resultant value by 100 in the measurement of the average cell diameter of the expanded beads. The value given by the square root of the unbiased variance is taken as the standard deviation.

(Bulk density of expanded beads)

The bulk density of the expanded beads of the present invention is not particularly limited, but is preferably 150 kg/m$^3$ or less, more preferably 100 kg/m$^3$ or less, and still more preferably 50 kg/m$^3$ or less. From the viewpoint of the stiffness of a molded article of expanded beads produced using the expanded beads, the bulk density of the expanded beads is preferably 10 kg/m$^3$ or more, more preferably 15 kg/m$^3$ or more, and still more preferably 20 kg/m$^3$ or more. In other words, the bulk density of the expanded beads in the present invention is preferably 10 kg/m$^3$ or more and 150 kg/m$^3$ or less, more preferably 15 kg/m$^3$ or more and 100 kg/m$^3$ or less, and still more preferably 20 kg/m$^3$ or more and 50 kg/m$^3$ or less.

The bulk density of the expanded beads is measured by the following method. First, the state of expanded beads to be measured is adjusted by allowing the expanded beads to still stand for 24 hours or more in an environment of an air temperature of 23°C, a relative humidity of 50%, and 1 atm. The expanded bead group having a mass W (g) after the state adjustment is filled in a measuring cylinder so as to be naturally deposited, and the filling height of the expanded bead group in the measuring cylinder is stabilized by lightly tapping the bottom surface of the measuring cylinder several times with respect to the horizontal plane. The bulk volume V (L) of the expanded bead group indicated by the scale of the measuring cylinder is read, the mass W of the expanded bead group is divided by the bulk volume V of the expanded bead group (W/V), and the unit conversion is performed, whereby the bulk density ($kg/m^3$) of the expanded beads can be obtained.

(High-temperature peak)

The expanded beads of the present invention preferably have a crystal structure showing a high-temperature peak described below. The expanded beads exhibiting a high-temperature peak are preferable from the viewpoint that the range of molding conditions in which a good molded article of expanded beads can be obtained is wider. Note that the crystal structure showing a high-temperature peak can be formed when the thermoplastic polymer constituting the expanded beads is a crystalline polymer.

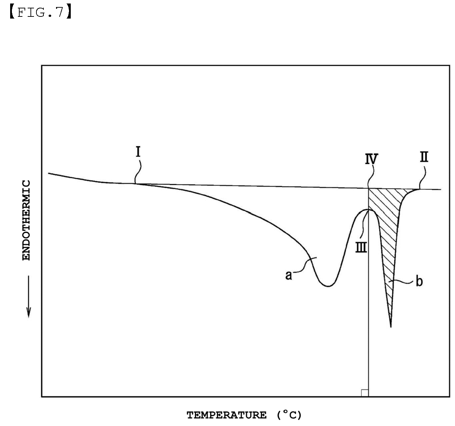

Here, the high-temperature peak refers to a melting peak at which a peak top temperature appears on a higher temperature side than a melting peak inherent to the thermoplastic polymer in a first DSC curve (see Fig. 7) measured when 1 to 3 mg of expanded beads as a test piece is heated and melted at a heating rate of 10°C/min from 30°C to a temperature higher than the end temperature of melting by 30°C by heat-flux differential scanning calorimetry on the basis of JIS K7122-1987. In the present specification, a melting peak intrinsic to the thermoplastic polymer may be referred to as an intrinsic peak a, and a melting peak at which a peak top temperature appears on a higher temperature side than the intrinsic peak a may be referred to as a high-temperature peak b. Fig. 7 is an example of a DSC curve measured based on heat-flux differential scanning calorimetry of the expanded beads. Although one high-temperature peak b is shown in Fig. 7, the high-temperature peak b may be two or more.

It is considered that the intrinsic peak a is a peak generated by melting of the intrinsic crystal of the thermoplastic polymer which is a base material constituting the expanded beads, and is a peak that appears by melting of the crystal usually possessed by the base material constituting the expanded beads. On the other hand, it is presumed that the high-temperature peak b appears when a secondary crystal different from the crystal usually present in the base material constituting the expanded beads is present. A method for obtaining expanded beads having the above-described high-temperature peak b will be described later.

From the viewpoint of obtaining a molded article of expanded beads excellent in the balance between buffering properties and stiffness, the heat of fusion of the high-temperature peak b of the expanded beads is preferably 5 J/g or more, more preferably 7 J/g or more, and still more preferably 10 J/g or more. From the viewpoint of reducing the pressure of the moldable steam during the in-mold molding of the expanded beads, the heat of fusion of the high-temperature peak b is preferably 30 J/g or less, more preferably 28 J/g or less, and still more preferably 25 J/g or less. In other words, the heat of fusion of the high-temperature peak b of the expanded beads is preferably 5 J/g or more and 30 J/g or less, more preferably 7 J/g or more and 28 J/g or less, and still more preferably 10 J/g or more and 25 J/g or less.

Note that, when two or more of the high-temperature peaks b appear, the heat of fusion of the high-temperature peak b means the total heat of all the high-temperature peaks b.

Note that, for a method of calculating the heat of fusion of the high-temperature peak b, reference is made to the description in Examples described later.

From the viewpoint of enhancing the filling property into the molding mold, the average bead diameter of the expanded beads is preferably 0.3 mm or more and 8 mm or less, more preferably 0.5 mm or more and 5 mm or less, and still more preferably 0.8 mm or more and 4.5 mm or less.

The average bead diameter of the expanded beads is a value determined by the following method. First, based on the volume-based bead size distribution of the expanded beads, the bead size distribution is converted into a number-based particle size distribution assuming that the shape of the beads is a sphere, thereby obtaining a number-based bead size distribution. Then, the number-based arithmetic average bead diameter can be determined by arithmetically averaging the bead diameters based on the number-based bead size distribution. Note that the bead diameter means a diameter of an imaginary sphere having the same volume as the bead. The volume-based bead size distribution of the expanded beads can be measured using a particle size distribution measuring apparatus (for example, "Millitrac JPA" manufactured by Nikkiso Co., Ltd.) or the like. The number of expanded beads used for the measurement may be, for example, 2000 or more.

From the same viewpoint, the average mass of the expanded beads is preferably 0.2 mg or more and 5 mg or less, more preferably 0.5 mg or more and 4 mg or less, and still more preferably 0.8 mg or more and 3 mg or less. The average mass of the expanded beads can be determined by randomly selecting 100 or more expanded beads, measuring the mass [mg] of the expanded bead group, and dividing the mass by the number of expanded beads used for the measurement.

(Method for producing thermoplastic polymer expanded beads)

The expanded beads of the present invention can be produced in accordance with a general method for producing expanded beads except that luminescent rare earth elements are blended. Examples of the general method for producing expanded beads include a method of preparing thermoplastic polymer particles, impregnating the thermoplastic polymer particles with a blowing agent, and then foaming the particles. Hereinafter, an example of the method for producing expanded beads of the present invention will be described.

First, a thermoplastic polymer and a luminescent rare earth element component are charged into an extruder, melt-kneaded to prepare a melt-kneaded product, and the melt-kneaded product is extruded from the extruder to produce thermoplastic polymer particles. In general, the melt-kneaded product extruded from the extruder is cut by a pelletizer or the like, the mass and shape of the melt-kneaded product are adjusted, and the melt-kneaded product is formed into small pellet-shaped thermoplastic polymer particles. The melt-kneaded product may contain an optional additive as appropriate. A luminescent rare earth element component may be contained in the thermoplastic polymer in advance before producing thermoplastic polymer particles.

In the case of producing multilayer expanded beads, a melt-kneaded product for forming a core layer constituting a core layer and a melt-kneaded product for forming a covering layer constituting a covering layer covering the core layer may be prepared and multilayer thermoplastic polymer particles may be produced using a producing apparatus including an extruder for forming a core layer, a die for forming a multilayer strand provided downstream of the extruder for forming a core layer, and an extruder for forming a covering layer. In the producing apparatus, the downstream side of an extruder for forming a polymer layer is connected to a die for forming a multilayer strand, a melt-kneaded products for forming each layer can be laminated in the die, and co-extrusion can be performed. Note that, in the present invention, the multilayer thermoplastic polymer particles produced as described above include an aspect in which the core layer serves as a foamed layer and the covering layer serves as a polymer layer covering the foamed layer, and an aspect in which the core layer serves as a polymer layer and the covering layer serves as a foamed layer covering the polymer layer.

Next, a dispersion step of supplying and dispersing the thermoplastic polymer particles obtained as described above, an aqueous medium, an inorganic dispersant, and other optional additives into a pressure vessel is performed, and an impregnation step of impregnating the thermoplastic polymer particles with a blowing agent is performed.

Note that examples of the aqueous medium include water.

Examples of the inorganic dispersant include inorganic substances such as aluminum oxide, tricalcium phosphate, magnesium pyrophosphate, zinc oxide, kaolin, mica, talc, and smectite. In addition to the dispersant, a dispersion auxiliary agent exemplified by an anionic surfactant such as sodium dodecylbenzene sulfonate or sodium alkane sulfonate may be added.

The blowing agent is appropriately selected from blowing agents that can be used for producing general expanded beads. Specific examples of the blowing agent include inorganic physical blowing agents such as carbon dioxide, air, nitrogen, helium, argon, and water; and organic physical blowing agents such as propane, butane, hexane, cyclopentane, ethyl chloride, 1,3,3,3-tetrafluoropropene, and 1-chloro-3,3,3-trifluoropropene. Among these blowing agents, a blowing agent containing an inorganic physical blowing agent such as carbon dioxide, nitrogen, or air as a main component is preferably used, and carbon dioxide is more preferably used. These physical blowing agents may be used singly or in combination of two or more kinds thereof.

In the case of producing expanded beads exhibiting the high-temperature peak b, in the dispersion step and/or the impregnation step described above, it is preferable to perform adjustment such as adjustment of the heating rate of the temperature in the pressure vessel, or holding the temperature in the pressure vessel at a predetermined temperature for a predetermined time. More specifically, for example, in the dispersion step and/or the impregnation step described above, the temperature in the pressure vessel is maintained at a temperature equal to or higher than [a temperature lower than the melting point of the base material by 20°C] and lower than [the end temperature of melting of the base material] for about 10 minutes to 60 minutes. Thereafter, the temperature in the pressure vessel is adjusted to a temperature equal to or higher than [a temperature lower than the melting point of the base material by 15°C] and lower than [the end temperature of melting of the base material]. Then, if necessary, the pressure vessel is further maintained at that temperature for about 10 minutes to 60 minutes. The crystalline state of the thermoplastic polymer particles is adjusted by such temperature adjustment. Note that the base material refers to a thermoplastic polymer constituting thermoplastic polymer particles.

Next, a foaming step of releasing the thermoplastic polymer particles and the aqueous medium under a pressure environment lower than the pressure in the pressure vessel and foaming the thermoplastic polymer particles is performed to obtain expanded beads having a high-temperature peak b. When the high-temperature peak b in the expanded beads is not required, the temperature adjustment in the pressure vessel described above may be appropriately omitted.

The foaming step is not limited to the above method, and for example, after the impregnation step, the polymer particles impregnated with the blowing agent are taken out from the pressure vessel, and the polymer particles are heated and foamed to obtain expanded beads.

Note that, in order to further reduce the bulk density of first-step expanded beads which are the expanded beads obtained in the foaming step described above, a second foaming step may be further performed.

The second foaming step is a step of supplying the first-step expanded beads produced as described above to pressure-resistant vessel, pressurizing the first-step expanded beads to increase the pressure (internal pressure) in the cells of the expanded beads, and heating and foaming the expanded beads again. By performing the second foaming step, expanded beads exhibiting a desired bulk density can be easily produced.

The production method described above does not limit the method for producing expanded beads of the present invention. For example, a melt-kneaded product containing no luminescent rare earth element component is prepared to produce thermoplastic polymer particles, and the thermoplastic polymer particles are foamed to obtain pre-expanded beads. The expanded beads of the present invention can be obtained by applying a luminescent rare earth element component to the pre-expanded beads by an arbitrary applying means.

Examples of the applying means include a method of sprinkling a particulate luminescent rare earth element component on the surface of the pre-expanded beads. In this case, by slightly melting the surface of the pre-expanded beads in advance by heating, the particulate luminescent rare earth element component can be firmly attached to the surface.

Examples of a different applying means include a method of preparing a liquid material in which an arbitrary luminescent rare earth element component is dispersed, applying the liquid material to the pre-expanded beads by a spray or the like, and then appropriately drying the liquid material.

[Molded article of thermoplastic polymer expanded beads]

The molded article of expanded beads of the present invention is produced by in-mold molding the expanded beads of the present invention described above. The molded article of expanded beads of the present invention has an excellent effect of the expanded beads of the present invention described above. That is, when the molded article of expanded beads of the present invention is irradiated with an electromagnetic wave, expanded beads constituting the molded article of expanded beads show a light emission reaction. As a result, the light emission reaction can be detected from the molded article of expanded beads. Therefore, the molded article of expanded beads of the present invention can be identified by detecting a light emission reaction.

The expanded beads themselves constituting the molded article of expanded beads can be tracked. Specifically, the molded article of expanded beads or the expanded beads constituting the molded article can be identified by collating whether or not an emission spectrum of a light emission reaction detected from the molded article of expanded beads and a preset reference emission spectrum exhibit a similar pattern. The content of the taggant particles in the molded product used for acquiring the reference emission spectrum is approximately 0.0001% by mass or more and 0.5% by mass or less. The molded product including taggant particles is specifically, for example, expanded beads.

Therefore, according to the present invention, by grasping the preset reference emission spectrum, the expanded beads constituting the molded article of expanded beads can be tracked from the molded article.

The molded article of expanded beads of the present invention is suitably used for various applications. Examples of the application include, but are not limited to, an automobile member, a packaging material, and a building material.

The molded article of expanded beads of the present invention is a molded article of expanded beads obtained by in-mold molding expanded beads containing a thermoplastic polymer and a luminescent rare earth element component that emits light upon electromagnetic wave irradiation and exhibits a specific emission spectrum. Such a molded article of expanded beads of the present invention can be identified as a molded article of expanded beads formed from expanded beads containing the luminescent rare earth elements by collating an emission spectrum detected by irradiating the molded article of expanded beads with electromagnetic waves with a preset reference emission spectrum showing a light emission reaction derived from luminescent rare earth elements. Details of this identification method will be described later.

(Molded article density of molded article of expanded beads)

From the viewpoint of excellent balance between lightweight properties and mechanical properties such as stiffness, the molded article density of the molded article of expanded beads of the present invention is preferably 10 kg/m$^3$ or more and 150 kg/m$^3$ or less, more preferably 15 kg/m$^3$ or more and 100 kg/m$^3$ or less, and still more preferably 20 kg/m$^3$ or more and 50 kg/m$^3$ or less.

The molded article density of the molded article of expanded beads is calculated by dividing the mass of the molded article of expanded beads by the volume calculated based on the outer dimension of the molded article of expanded beads. Note that, when it is difficult to calculate the volume from the outer dimension, the volume of the molded article of expanded beads can be determined by a submersion method.

(L* value of molded article of expanded beads)

The present invention can provide a black molded article of expanded beads by using the expanded beads of the present invention significantly exhibiting black color. The L* value of the molded article of expanded beads is, for example, preferably 30 or less, more preferably 28 or less, and still more preferably 25 or less.

The L* value of the molded article of expanded beads is the L* value of the surface of the molded article of expanded beads in CIE 1976 L*a*b* color system, and can be measured with a spectral color difference meter. The L* value is an index of brightness, and a lower L* value means a higher degree of blackness and a darker black.

A black molded article of expanded beads tends to be preferred in the automobile field and the like because it gives a luxurious impression to a viewer. However, since the black molded article of expanded beads generally absorbs light, it has been considered to be undesirable from the viewpoint of detecting a light emission reaction.

In view of such a problem, for example, it has been considered to sufficiently increase the blending amount of taggant particles in the expanded beads. However, in this case, the taggant particles act as a nucleus point for cell formation, and the uniformity of cells formed in the expanded beads may be deteriorated.

Therefore, further studies have been made in order to provide a molded article of expanded beads that exhibits a black color and enables detection of a light emission reaction while maintaining a good foamed state of expanded beads. As described in the above description of the expanded beads of the present invention, it has been found that it is particularly preferable to use the expanded beads of the present invention which include a foamed layer and a polymer layer and in which the content Ctt of the taggant particles in the expanded beads is 0.0001% by mass or more and 0.5% by mass or less, and the ratio [Ctr/Ctt] of the content Ctr of the taggant particles in the polymer layer to the content Ctt of the taggant particles in the expanded beads is 2 or more. By significantly increasing the content of the taggant particles in the polymer layer, a light emission reaction is easily generated, whereby the detection accuracy of light can be improved. Therefore, even in the case of a black molded article of expanded beads, it is possible to sufficiently perform identification by a light emission reaction. By setting the content of the taggant particles in the foamed layer to 0 or lower than that in the polymer layer, it is possible to more reliably avoid that the taggant particles have an undesirable influence on the foamed state of the expanded beads.

From the viewpoint of increasing the degree of blackness and more sufficiently increasing the detection accuracy of the light emission reaction, it is preferable to use expanded beads including the foamed layer and the polymer layer covering the foamed layer, and it is more preferable to use expanded beads including the foamed layer and the polymer layer covering the foamed layer, in which the polymer layer is located on the surface of the expanded beads.

[Method for producing molded article of thermoplastic polymer expanded beads]

A molded article of expanded beads of the present invention can be obtained by in-mold molding the expanded beads of the present invention. For example, the molded article of expanded beads is produced as follows. First, the expanded beads of the present invention are filled in a molding mold having a cavity corresponding to the shape of a desired molded article of expanded beads, and the expanded beads filled in the molding mold are heated with a heating medium such as steam. The expanded beads in the cavity are softened by heating and subjected to secondary expansion, and surfaces are melted and then, fused to each other. As a result, the expanded beads are integrated with each other, and a molded article of expanded beads according to the shape of the cavity is obtained.

[Identification method of thermoplastic polymer expanded beads or molded article of thermoplastic polymer expanded beads]

Next, the identification method of the present invention will be described. The identification method of the present invention includes an identification method of the thermoplastic polymer expanded beads of the present invention and an identification method of the molded article of thermoplastic polymer expanded beads of the present invention. The identification method of the present invention identifies the molded article of thermoplastic polymer expanded beads, and at the same time, can identify thermoplastic polymer expanded beads constituting the molded article of thermoplastic polymer expanded beads by identifying the molded article. Since the identification method of the present invention is non-destructive, it is possible to perform identification while maintaining the aesthetic appearance without changing the states of the expanded beads and the molded article of expanded beads before and after the identification step. The identification method of the present invention includes a first identification method including configurations i) and ii) described later and further including at least iii-1), and a second identification method including configurations i) and ii) described later and further including at least iii-2).

The first identification method of the thermoplastic polymer expanded beads of the present invention includes the following steps i), ii), and iii-1):

i) an electromagnetic wave irradiation step of irradiating a surface of the thermoplastic polymer expanded beads with an electromagnetic wave;

ii) a detection step of detecting, with a detection device, a light emission reaction derived from luminescent rare earth elements due to the electromagnetic wave irradiation to obtain an emission spectrum; and

iii-1) an identification step of comparing the emission spectrum with a blank spectrum showing no light emission reactions derived from luminescent rare earth elements.

The first identification method of the molded article of thermoplastic polymer expanded beads of the present invention includes the following steps i), ii), and iii-1):

i) an electromagnetic wave irradiation step of irradiating a surface of the molded article of thermoplastic polymer expanded beads with an electromagnetic wave;

ii) a detection step of detecting, with a detection device, a light emission reaction derived from luminescent rare earth elements due to the electromagnetic wave irradiation to obtain an emission spectrum; and

iii-1) an identification step of comparing the emission spectrum with a blank spectrum showing no light emission reaction derived from luminescent rare earth elements.

Whether or not the expanded beads or the molded article of expanded beads of the present invention exhibit a light emission reaction can be determined by the steps i), ii), and iii-1).

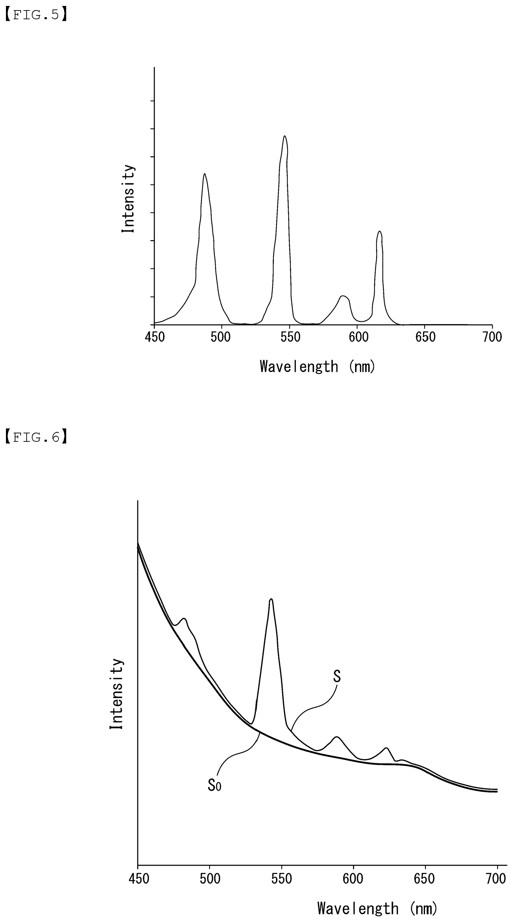

Whether or not the expanded beads or the molded article of expanded beads exhibits a light emission reaction can be determined by the following method. Here, a method for determining whether or not the molded article of expanded beads exhibits a light emission reaction will be described. Note that Fig. 6 is referred to for an emission spectrum (S) and a spectrum ($S_0$) described later. First, a molded article of expanded beads which is an identification target-and a molded product which is a blank having the same composition as that of the identification target except that a luminescent rare earth element component is not contained are prepared. The molded product as a blank is preferably a molded article of expanded beads prepared in the same manner as the identification target except that it does not contain a luminescent rare earth element component. Then, the molded article and the molded product are irradiated with electromagnetic waves having a predetermined wavelength, and an emission spectrum (S) of the molded article of expanded beads of the present invention and a spectrum ($S_0$) of the molded product (for example, molded article of expanded beads) as a blank, which are generated by the irradiation, are detected. Next, for all peaks appearing in the emission spectrum (S), each wavelength and a peak intensity I of the emission peak at each wavelength are confirmed. An intensity $I_0$ of the spectrum ($S_0$) at each wavelength confirmed as described above is confirmed. Then, a ratio ($I/I_0$) of the peak intensity I at each wavelength in the emission spectrum (S) to the intensity $I_0$ at each wavelength in the spectrum ($S_0$) is calculated. Note that, in the following description, the ratio may be referred to as the ratio ($I/I_0$) of the peak intensity I, or simply referred to as the ratio ($I/I_0$). Then, a maximum value among the ratios ($I/I_0$) of the peak intensities I obtained at the respective wavelengths is specified. It is confirmed that the higher the maximum value of the ratio ($I/I_0$), the more accurately the light emission reaction of the molded article of expanded beads of the present invention was detected. When the maximum value of the ratio ($I/I_0$) is 1.1 or more, it can be determined that a light emission reaction occurs in an identification target. On the other hand, when the maximum value of the ratio $I/I_0$ is less than 1.1 or when no peak appears in the emission spectrum (S), it can be determined that no light emission reaction has occurred. The ratio ($I/I_0$) is preferably 1.3 or more, more preferably 1.5 or more, still more preferably 1.8 or more, and particularly preferably 2.0 or more. When the ratio ($I/I_0$) is within the above range, it means that the light emission reaction is more efficiently generated and the detection accuracy is improved. However, the intensity $I_0$ and the peak intensity I are measured under the same measurement condition using the same device.

Note that, in the above-described discrimination, identification target maw be expanded beads instead of the molded article. In this case, the molded product as a blank is preferably expanded beads produced in the same manner as in the expanded beads to be identified except that the luminescent rare earth element component is not contained.

The second identification method of the thermoplastic polymer expanded beads of the present invention includes the following steps i), ii), and iii-2):

i) an electromagnetic wave irradiation step of irradiating a surface of the thermoplastic polymer expanded beads with an electromagnetic wave;

ii) a detection step of detecting, with a detection device, a light emission reaction derived from luminescent rare earth elements due to the electromagnetic wave irradiation to obtain an emission spectrum; and

iii-2) an identification step of collating the emission spectrum with a preset reference emission spectrum showing a light emission reaction derived from luminescent rare earth elements.

The second identification method of the molded article of thermoplastic polymer expanded beads of the present invention includes the following steps i), ii), and iii-2):

i) an electromagnetic wave irradiation step of irradiating a surface of the molded article of thermoplastic polymer expanded beads with an electromagnetic wave;

ii) a detection step of detecting, with a detection device, a light emission reaction derived from luminescent rare earth elements due to the electromagnetic wave irradiation to obtain an emission spectrum; and

iii-2) an identification step of collating the emission spectrum with a preset reference emission spectrum showing a light emission reaction derived from luminescent rare earth elements.

The second identification method has a preferable effect in that various pieces of information on the expanded beads can be tracked by including step iii-2). Examples of the various pieces of information on the expanded beads include one or more pieces of information selected from properties, physical properties, production conditions, and sources of the expanded beads. The property is a property of a material constituting the expanded beads. Examples of the physical properties include the apparent density of the expanded beads. As the production conditions, one or more kinds selected from a production lot number, a production date, and the like are exemplified. The source is exemplified by a manufacturer name of the expanded beads. Generation of the effect will be specifically described below.

In the second identification method of the present invention described above, as described above, the preset reference emission spectrum refers to an emission spectrum detected when a molded product containing a predetermined luminescent rare earth element component and formed from a polymer having a predetermined composition is irradiated with an electromagnetic wave having a predetermined wavelength. That is, the reference emission spectrum is derived from a specific emission spectrum indicated by a light emission reaction of the predetermined luminescent rare earth element component.

However, even in the case of irradiation with electromagnetic waves of the same wavelength, the emission spectrum generated by the irradiation can be affected not only by the luminescent rare earth element component but also by the composition of the polymer constituting the expanded beads or an optional additive, and thus the reference emission spectrum is not necessarily the same as the intrinsic emission spectrum of the contained luminescent rare earth element component itself. Therefore, the preset reference emission spectrum is set in consideration of the composition of the polymer constituting the expanded beads and the influence of additives.

In order to make significant use of step iii-2), for the expanded beads serving as the reference indicating the reference emission spectrum, for example, various pieces of information including the property of a material constituting the expanded beads, physical property information of expanded beads exemplified by apparent density of the expanded beads, production condition information exemplified by a production lot number and a production date, and source information exemplified by a producer may be associated with the reference emission spectrum. As a result, the second identification method is performed, and it is possible to track that light-emitting particles showing the emission spectrum of the same pattern as the reference emission spectrum by the collation have the same information as the expanded beads serving as the reference. When the identification target is a molded article of expanded beads, it is possible to track that the expanded beads constituting the molded article of expanded beads have the same information as the expanded beads as the reference by the collation. That is, the second identification method including step iii-2) enables more advanced identification.

The content of the luminescent rare earth element component such as the taggant particles in the expanded beads used for acquiring the reference emission spectrum is approximately 0.0001% by mass or more and 0.5% by mass or less. Note that, when the preset reference emission spectrum is acquired, it is preferable to acquire an intrinsic emission spectrum of the luminescent rare earth element component itself as shown in Fig. 5. As a result, it is possible to compare the peak in the intrinsic emission spectrum of the luminescent rare earth element component itself with the peak of the preset reference emission spectrum. In this case, the accuracy in the identification step can be further improved.

The emission spectrum of the expanded beads or the molded article of expanded beads to be identified is confirmed in a chart in which the vertical axis indicates the intensity of the peak and the horizontal axis indicates the wavelength as in the emission spectrum (S) in Fig. 6. It is determined whether or not the emission spectrum (S) of the expanded beads or the molded article of expanded beads containing the luminescent rare earth element component is the same pattern as the reference emission spectrum (not shown), on the basis of the concept of an emission peak composed of one or two or more elements selected from the shape of the entire pattern, the number of peaks, the wavelength at which each peak is detected, the shape of each peak, the intensity ratio between the peaks, the area ratio between the peaks, and the like. The absolute value of the intensity of the peak may not be included in the element constituting the emission spectrum. However, the reference emission spectrum and the identification target emission spectrum are measured under the same measurement condition using the same device.

Even when the details of the luminescent rare earth element component contained in the taggant particles are unknown, the above-described detection and collation can be performed by irradiating the expanded beads having a predetermined composition including the taggant particles with an electromagnetic wave having a predetermined wavelength, as long as a reference expanded spectrum is confirmed in advance. As a result, the expanded beads or the molded article of expanded beads to be identified can be identified. Note that the details of the luminescent rare earth element component refer to, for example, the type and combination of the luminescent rare earth elements contained in the luminescent rare earth element component, the type of ligands for coordinating the luminescent rare earth elements, and a method for producing the same.

A specific means for collation between the reference emission spectrum and the detected emission spectrum is not particularly limited. For example, it is possible to use a detection device including a program for calculating a statistical degree of coincidence of the detected emission spectrum with respect to the reference emission spectrum and automatically determining a collation result from the degree of coincidence. For example, the number and wavelength of peaks can be compared between the peak indicated in the pattern of the reference emission spectrum and the peak indicated in the detected emission spectrum, and in a case where two or more peaks are indicated, the collation can be performed manually by comparing the area ratio or the like of each peak.

The marking method of the related art as in Patent Literatures 1 and 2 can be easily identified only by visually observing the surface of the molded article, but there is a possibility that it is copied by a malicious third party. According to the present invention, the pattern of the emission spectrum can be finely adjusted by, for example, the type or combination of the selected luminescent rare earth elements and the type of the ligands for coordinating the luminescent rare earth elements. Therefore, the marking by the emission spectrum is prevented from being replicated by a third party. It is possible to easily determine the authenticity by defining a reference spectrum as the emission spectrum of the genuine article and collating the spectrum with the emission spectrum detected from the expanded beads or the molded article of expanded beads to be identified.

Examples

Hereinafter, the present invention will be described in detail with reference to Examples, but the present invention is not limited thereto.

Details of the resins used in Examples and Comparative Examples are shown in Table 1. Tables 2 to 4 show compositions and contents for producing expanded beads of each Example and each Comparative Example, and also show evaluation results of each Example and each Comparative Example. In the table, carbon black is denoted as CB. Note that the content of each composition described herein is the same as the blending amount of each component blended for producing expanded beads. In the following Examples and Comparative Examples, resin particles made of a resin material were produced as thermoplastic polymer particles.

Luminescent compounds used in Examples and Comparative Examples are as follows. Note that a luminescent compound 1 is a taggant particle containing a luminescent rare earth element, and a luminescent compound 2 and a luminescent compound 3 are particulate luminescent compounds containing no luminescent rare earth element.

Note that Fig. 5 shows a chart of an emission spectrum detected when the luminescent compound 1 was irradiated with ultraviolet rays having a wavelength of 320 nm.

<Luminescent compound 1>

Manufactured by OLNICA; grade name: OLNICA65013919 (crystalline ligand obtained by reaction of luminescent rare earth element and unsaturated organic ligand)
Luminescent rare earth element included; terbium
Electromagnetic wave used; ultraviolet ray of 320 nm
Intrinsic emission spectrum of the luminescent compound 1; peaks are shown at 488 nm, 546 nm, 589 nm, and 622 nm.

<Luminescent compound 2>

manufactured by Sigma-Aldrich Co. LLC; 4,4-bis(2-benzoxazolyl)stilbene (BBS)
Electromagnetic wave used; ultraviolet ray of 320 nm
Intrinsic emission spectrum of the luminescent compound 2; peaks are shown at 430 nm, 470 nm, and 500 nm.

<Luminescent compound 3>

Organic coloring pigment containing quinacridone as a main component
Electromagnetic wave used; ultraviolet ray of 320 nm
Intrinsic emission spectrum of the luminescent compound 3; 653 nm

Examples and Comparative Examples described below are implemented based on the first identification method of the present invention. However, expanded beads containing each luminescent compound and having the same composition as those of each of Examples and Comparative Examples were irradiated with ultraviolet rays having a wavelength of 320 nm in advance, and an emission spectrum of the generated light emission reaction was detected by a detection device described later to confirm a reference emission spectrum. These reference emission spectra are not required in a detection test of a light emission reaction in the first identification method described later. As described at the end of the present example, the reference emission spectrum is used when the reference emission spectrum is collated with the emission spectrum of each of Examples and Comparative Examples at the time of performing the second identification method of the present invention.

<Example 1>

(Production of resin particles)

A producing apparatus including an extruder for forming a core layer having an inner diameter of 50 mm, a die for forming a multilayer strand provided downstream of the extruder for forming a core layer, and an extruder for forming a covering layer having an inner diameter of 30 mm was prepared. Note that the producing apparatus had a configuration in which the downstream side of the extruder for forming a covering layer is connected to the die for forming a multilayer strand, the melt-kneaded product for forming each layer can be laminated in the die, and co-extrusion can be performed. As a resin constituting the core layer, a virgin polypropylene-based resin (PP1) shown in Table 1 was used. As a core layer molding material constituting the core layer, in addition to the resin described above, zinc borate as a cell controlling agent was used in an amount of 0.1 parts by mass with respect to 100 parts by mass of the core layer molding material, and carbon black was used in the content shown in Table 2, and these were supplied to the extruder for forming a core layer and melt-kneaded.

As a resin constituting the covering layer, a virgin polypropylene-based resin (PP2) shown in Table 1 was used. As a covering layer forming material constituting the covering layer, in addition to the above-described resin, the luminescent compound 1 and carbon black were used in the contents shown in Table 2, and these were supplied to the extruder for forming a covering layer and melt-kneaded.

The melt-kneaded product for forming each layer obtained by melt-kneading as described above was introduced into the die for forming a multilayer strand and joined in the die, and a multilayer strand having a two-layer structure (covering layer/core layer) having a core layer and a covering layer covering the side peripheral surface of the core layer was extruded from pores of a spinneret attached to the downstream side of the die. The extruded strand was cooled with water in a water tank and cut with a pelletizer to obtain resin particles having an average mass per particle of 1.0 mg.

(Production of expanded beads)

Into a pressure vessel having a capacity of 5 L, 1 kg of the resin particles obtained as described above was supplied together with 3 L of water as an aqueous dispersion medium. Into the pressure vessel, 0.3 parts by mass of kaolin as an inorganic dispersant and 0.004 parts by mass of a surfactant (as an active ingredient) were each added with respect to 100 parts by mass of the resin particles. As the surfactant, sodium dodecylbenzene sulfonate: manufactured by DKS Co., Ltd., trade name NEOGEN was used.

Then, carbon dioxide as a blowing agent was press-fitted into the pressure vessel, and the pressure vessel was pressurized until the gauge pressure reached 2.0 MPa (G). Note that, the pressure denoted by (G) is a gauge pressure, that is, a value of the pressure based on the atmospheric pressure. Thereafter, while the inside of the pressure vessel was stirred, the temperature was raised at a heating rate of 2°C/min until the temperature reached the foaming temperature shown in Table 2, and the pressure vessel was maintained at the same temperature for 15 minutes. Thus, the obtained expanded beads were adjusted so that a high-temperature peak appeared in a DSC curve (endothermic curve) obtained by heat-flux differential scanning calorimetry.

Thereafter, the resin particles and water as the contents of the pressure vessel were released under atmospheric pressure to foam the core layer, thereby obtaining expanded beads having a multilayer structure which includes a foamed layer and a covering layer in a non-foamed state as a polymer layer, the covering layer covering the foamed layer. The foaming pressure in the pressure vessel immediately before foaming was a value shown in Table 2. The obtained expanded beads were left to stand for 24 hours in an environment of 23°C, a relative humidity of 50%, and 1 atm, and were aged.

(Production of molded article of expanded beads)

The expanded beads after aging were filled into a molding mold having a molding cavity capable of molding a flat plate-shaped molded article of 400 mm length × 300 mm width × 30 mm height by compression filling so as to have a filling rate P shown in Table 2. A metal mold was used as the molding mold. Compression filling is a filling method in which expanded beads are filled in a molding mold in a compressed state by applying pressure to the expanded beads. Thereafter, steam was supplied into the molding mold to heat the expanded beads, thereby obtaining a flat plate-shaped molded article of expanded beads. Heating with steam was performed as follows. First, in a state where drain valves provided on both surfaces of a molding mold were opened, steam was supplied to the molding mold to perform preheating (exhaust step). Thereafter, steam was supplied from one side of the molding mold to perform heating, and steam was further supplied from the other side of the molding mold to perform heating. Subsequently, steam was supplied from both sides of the molding mold and heated until the inside of the molding mold reached the molding pressure shown in Table 2. After completion of the heating, the pressure was released, and water cooling was performed until the pressure generated on the molding surface of the molding mold reached 0.04 MPa (G), then the molding mold was opened, and the molded article of expanded beads was taken out. The obtained molded article of expanded beads was aged in an oven at 80°C for 12 hours and then slowly cooled to room temperature to obtain a molded article of expanded beads.

Note that the filling rate P is a value represented by the following formula (1).

[Formula 1]

$$P = [a/(b \times c)] \times 100 \cdots (1)$$

provided that, in the formula (1), a is a mass (unit: kg) of the expanded beads filled in the molding mold, b is a bulk density (unit: kg/m$^3$) of the expanded beads, and c is an internal volume (unit: m$^3$) of the molding mold.

<Examples 2, 3, 7 to 11, and 14 and Comparative Example 1>

Expanded beads and a molded article of expanded beads were produced in the same manner as in Example 1 except that the contents were changed from Table 2 to Table 4.

<Examples 4 to 6, 12, and 13 and Comparative Examples 2 and 3>

A melt-kneaded product was prepared by melt-kneading using a resin, carbon black, and a luminescent compound described in Tables 2 to 4. Then, the melt-kneaded product was supplied to an extruder for a single layer, and a strand was extruded. The extruded strand was cooled with water and cut with a pelletizer to obtain resin particles having an average mass per particle of 1.0 mg.

The resin particles obtained as described above were foamed in the same manner as in Example 1 to produce single-layered expanded beads.

A molded article of expanded beads was produced in the same manner as in Example 1 using the expanded beads obtained as described above.

<Measurement of bulk density of expanded beads>

The state of the expanded beads was adjusted by allowing the expanded beads to stand still for 24 hours in an environment of an air temperature of 23°C, a relative humidity of 50%, and 1 atm. The expanded bead group having a mass W (g) after the state adjustment was filled in a measuring cylinder so as to be naturally deposited, and the filling height of the expanded bead group in the measuring cylinder was stabilized by lightly tapping the bottom surface of the measuring cylinder several times with respect to the horizontal plane. The bulk volume V (L) of the expanded bead group indicated by the scale of the measuring cylinder was read, the mass W of the expanded bead group was divided by the bulk volume V of the expanded bead group (W/V), and the unit conversion was performed, whereby the bulk density (kg/m$^3$) of the expanded beads was obtained.

<Measurement of heat of fusion of high-temperature peak of expanded beads>

Based on JIS K7122-1987, by heat-flux differential scanning calorimetry, a first DSC curve (see Fig. 7) was obtained which was measured when 2 mg of expanded beads was used as a test piece and heated and melted at a heating rate of 10°C/min from 30°C to a temperature higher than the temperature at the end of the melting peak by 30°C.

Then, in the DSC curve shown in Fig. 7, a straight line connecting a point I corresponding to 80°C on the DSC curve and a point II corresponding to the end temperature of melting of the expanded beads was drawn. Note that the end temperature of melting is an end point on the high temperature side of the high-temperature peak b, and is an intersection of the high-temperature peak b and the baseline on the higher temperature side than the high-temperature peak b in the DSC curve.

As shown in Fig. 7, after a straight line connecting the point I and the point II was drawn, an intersection of a straight line passing through the maximum point III existing between the intrinsic peak a and the high-temperature peak b and parallel to the vertical axis of the graph and a straight line connecting the point I and the point II was defined as IV.

An area of a portion surrounded by a straight line connecting the point I and the point IV, a straight line connecting the point III and the point IV, and a DSC curve connecting the point I and the point III was defined as an area of the intrinsic peak a. An area of a portion (hatched portion) surrounded by a straight line connecting the point IV and the point II, a straight line connecting the point III and the point IV, and a DSC curve connecting the point III and the point II was defined as an area of the high-temperature peak b. The value of the total heat of fusion of the expanded beads was calculated from the sum of the area of the intrinsic peak a and the area of the high-temperature peak b obtained as described above, and the value of the heat of fusion of the high-temperature peak b was calculated from the area of the high-temperature peak b.

<Measurement of average cell diameter of expanded beads and calculation of coefficient of variation in cell diameter>

First, the expanded beads were cut at a position where the volume of the expanded beads was bisected. Next, a photograph of the cross section was taken so that the exposed cross section was entirely within the field of view. On the captured photograph, four line segments from the outermost surface of the expanded beads to the opposite outermost surface through the central portion were drawn so that the angles formed by the adjacent line segments were equal. That is, on the photograph, four line segments were drawn so that the angle formed by the adjacent line segments was 45°. The value (L/N) obtained by dividing the total length L of the four line segments thus obtained by the number N of all cells in contact with the line segment was taken as the average cell diameter in one expanded bead. This operation was performed on 20 expanded beads, and the arithmetic mean thereof was taken as the average cell diameter of the expanded beads.

The standard deviation of the cell diameter of the expanded beads was divided by the average cell diameter of the expanded beads, and this was multiplied by 100 to obtain the coefficient of variation. The value given by the square root of the unbiased variance was taken as the standard deviation.

<Measurement of molded article density of molded article of expanded beads>

The density of the molded article of expanded beads was calculated by dividing the mass of the molded article of expanded beads by the volume calculated based on the outer dimension of the molded article of expanded beads.

<Measurement of L* value of molded article of expanded beads>

Five sites were randomly selected from the skin surface of the molded article of expanded beads, that is, the surface that was in contact with the molding mold during molding, and the L* value of the molded article of expanded beads was measured using a spectrocolorimeter ("SE2000" manufactured by Nippon Denshoku Industries Co., Ltd.). Note that the measurement range was set to 30 mm$\varphi$, and the measurement method was a reflection method. Then, the arithmetic mean of the L* values at these five measurement positions was taken as the L* value of the molded article of expanded beads.

<Detection test of a light emission reaction>

In a detection test, a detection test of a light emission reaction from the molded article of expanded beads was performed using a spectrometer (product name: AvaSpec-2048) manufactured by AVANTES as a detection device of a light emission reaction. The detection device has a function of detecting at least an emission spectrum of a light emission reaction due to the electromagnetic wave irradiation.

Specifically, first, a test piece was cut out from the molded article of expanded beads such that the skin surface was a surface to be detected, and the test piece was placed on a holder of the detection device. Then, the surface to be detected was irradiated with ultraviolet rays having a wavelength of 320 nm using an ultraviolet irradiation device. Then, an emission spectrum (S) emitted from the molded article of expanded beads by such irradiation was detected. For each peak in the emission spectrum (S), the wavelength at which each peak was confirmed and the peak intensity I of each peak were recorded. The emission spectrum (S) in Example 1 is shown in Fig. 6.

(Ratio ($I/I_0$) of peak intensity I)

Expanded beads were produced in the same manner as in each Example and each Comparative Example except that the luminescent compound was not blended, and a molded article of expanded beads as a blank was produced using the expanded beads. Using the molded article of expanded beads as a blank, detection was performed in the same manner as in the detection test of the light emission reaction, and the spectrum ($S_0$) emitted from the molded article of expanded beads as a blank was detected. Since the molded article of expanded beads as a blank does not contain a hakkosei compound, the spectrum ($S_0$) can also be said to be a "baseline" that does not show a clear emission peak. The spectrum ($S_0$) of the blank in Example 1 is shown in Fig. 6. The intensity $I_0$ of the spectrum ($S_0$) at each wavelength confirmed as described above in the emission spectrum (S) was confirmed.

Then, the ratio ($I/I_0$) of the peak intensity I at each wavelength in the emission spectrum (S) to the intensity $I_0$ at each wavelength in the spectrum ($S_0$) was calculated. Then, the maximum value of the obtained ratio ($I/I_0$) of each peak intensity I was specified. This was defined as the maximum value of the ratio ($I/I_0$) of the peak intensity I, and is described in Tables 2 to 4. When the maximum value of the ratio ($I/I_0$) of the peak intensity I was 1.1 or more, it was determined that the expanded beads constituting the molded article of expanded beads exhibited a light emission reaction. A higher maximum value of the ratio of peak intensity I ($I/I0$) indicates that the luminescence reaction can be detected with higher accuracy.

As shown in Tables 2 to 4, the maximum value of the ratio ($I/I_0$) of the peak intensity I was 1.1 or more in all Examples, and in the expanded beads of the present invention, the light emission reaction derived from the luminescent rare earth element was detected by electromagnetic wave irradiation, and it was confirmed that the expanded beads can be identified as the expanded beads of the present invention. Note that, in all Examples in which the luminescent compound 1 was used, the wavelength of the emission peak of the emission spectrum (S) showing the maximum value of the ratio ($I/I_0$) of the peak intensity I was 546 nm.

Note that the detection test of the light emission reaction performed in the present example was performed on the basis of the first identification method, but such a test does not limit the method of identifying the expanded beads of the present invention. For example, a preset reference emission spectrum is confirmed using expanded beads or a molded article of expanded beads containing one or two or more predetermined luminescent rare earth element components. It is also possible to adopt the second identification method of identifying an identification target by collating an emission spectrum of expanded beads or a molded article of expanded beads to be identified with the preset reference emission spectrum.

The collation may be performed by a program for determining whether or not patterns of both emission spectra coincide with each other by comparing one or more items selected from the number of peaks, the wavelength of the peak, the intensity ratio between the peaks, the area ratio between the peaks, and the like of both emission spectra to be collated. By adopting such an identification method, expanded beads or a molded article of expanded beads can be more highly identified.

For example, more advanced identification of expanded beads or a molded article of expanded beads by the second identification method can be performed as follows. First, expanded beads (No. 1) containing the luminescent compound 1 are produced using a recycled raw material as a polypropylene-based resin. Next, the expanded beads (No. 1) are in-mold molded to produce a molded article of expanded beads (No. 1). Note that the expanded beads (No. 1) and the molded article of expanded beads (No. 1) can be produced, for example, by the same method as in Example 1 except for using a recycled raw material as a polypropylene-based resin.

A test piece is cut out from the molded article of expanded beads (No. 1) so that the skin surface becomes a surface to be detected, and the surface to be detected is irradiated with ultraviolet rays having a wavelength of 320 nm. Then, an emission spectrum emitted from the molded article of expanded beads (No. 1) by the irradiation is detected, and the expanded spectrum is recorded in the device as a reference emission spectrum. The reference emission spectrum is associated with information that the molded article is a molded article of expanded beads formed from the expanded beads produced using a recycled polypropylene-based resin.

Next, expanded beads (No. 2) containing the luminescent compound 1 are produced using a recycled raw material as a polypropylene-based resin. Next, the expanded beads (No. 2) are in-mold molded to produce a molded article of expanded beads (No. 2) to be identified. Note that the expanded beads (No. 2) and the molded article of expanded beads (No. 2) are produced, for example, by the same method as in Example 1. Then, an emission spectrum emitted from the molded article of expanded beads (No. 2) by the irradiation is detected, the expanded spectrum is collated with the reference emission spectrum detected as described above, and it is confirmed that the patterns of both the emission spectra coincide with each other.

According to the above operation, when the patterns of both the emission spectra coincide with each other, it is identified that the molded article of expanded beads (No. 2) to be identified is a molded article of expanded beads formed from expanded beads produced using a recycled polypropylene-based resin in the same manner as the expanded beads (No. 1).

[Table 1]

(Table 1)

| No. | Resin | Melting point (°C) (*1) | MFR (g/10 min) (*2) |
|---|---|---|---|
| PP1 | Polypropylene-based resin | 144 | 5 |
| PP2 | Polypropylene-based resin | 134 | 5 |
| (*1) Melting point measured on the basis of JIS K7121:1987 | | | |
| (*2) Melt mass-flow rate measured on the basis of JIS K7210-1:2014 under conditions of 230°C and a load of 2.16 kg | | | |

[Table 2]

| | | | | Unit | Example 1 | Example 2 | Example 3 | Example 4 | Example 5 | Example 6 |
|---|---|---|---|---|---|---|---|---|---|---|
| Resin particles | Core layer (foamed layer) | Resin used | Type | - | PP1 | PP1 | PP1 | PP1 | PP1 | PP1 |
| | | CB | Content | mass% | 2, 8 | 2, 8 | 2, 8 | 2, 8 | 2,8 | 2,8 |
| | | Luminescent compound | Type | - | - | - | - | Luminescent compound 1 | Luminescent compound 1 | Luminescent compound 1 |
| | | | Content (Ctc) | mass% | 0 | 0 | 0 | 0, 05 | 0, 01 | 0,005 |
| | Covering layer (polymer layer) | Resin used | Type | - | PP2 | PP2 | PP2 | | | |
| | | CB | Content | mass% | 2, 8 | 2, 8 | 2, 8 | | | |
| | | Luminescent compound | Type | - | Luminescent compound 1 | Luminescent compound 1 | Luminescent compound 1 | - | - | - |
| | | | Content (Ctr) | mass% | 0, 0667 | 0, 04 | 0, 02 | | | |
| | Content of polymer layer in resin particles | | | mass% | 3 | 3 | 3 | | | |
| | Ctt: content of luminescent compound in resin particles | | | mass% | 0,0020 | 0, 0012 | 0, 0006 | 0,050 | 0, 010 | 0,005 |
| | Cct: content of CB in resin particles | | | mass% | 2, 8 | 2, 8 | 2, 8 | 2, 8 | 2,8 | 2,8 |
| | Ctr/Ctt | | | - | 33 | 33 | 33 | - | - | - |
| Foaming step | Foaming temperature | | | °C | 150,7 | 151,1 | 150, 9 | 150, 9 | 150,7 | 150,9 |
| | Foaming pressure | | | MPaG | 3, 4 | 3, 4 | 3,3 | 3, 4 | 3,4 | 3,4 |
| Expanded beads | Bulk density | | | kg/m$^3$ | 37 | 38 | 35 | 33 | 33 | 35 |
| | Heat of fusion of high-temperature peak | | | J/g | 17, 5 | 16,2 | 15,8 | 15, 9 | 17, 5 | 17,4 |
| | Average cell diameter | | | $\mu$m | 109 | 111 | 97 | 102 | 124 | 118 |
| | Coefficient of variation in cell diameter | | | % | 11 | 17 | 14 | 10 | 8 | 10 |
| Molding conditions | Filling rate P | | | % | 161 | 159 | 169 | 164 | 170 | 165 |
| | Molding pressure | | | MPaG | 0,22 | 0,22 | 0,22 | 0,22 | 0,22 | 0,22 |
| Molded article of expanded beads | Molded article density | | | kg/m$^3$ | 63 | 63 | 62 | 57 | 58 | 60 |
| | L* value | | | - | 27,3 | 27,2 | 27,5 | 28, 4 | 27,5 | 27, 9 |

|  |  | Unit | Example 1 | Example 2 | Example 3 | Example 4 | Example 5 | Example 6 |
|---|---|---|---|---|---|---|---|---|
| Detection test of light emission reaction | Maximum value of ratio ($I/I_0$) of peak intensity I | - | 2,82 | 2,11 | 1,9 | 6,03 | 2,11 | 1,57 |

[Table 3]

| | | | | Unit | Example 7 | Example 8 | Example 9 | Example 10 | Example 11 |
|---|---|---|---|---|---|---|---|---|---|
| Resin particles | Core layer (foamed layer) | Resin used | Type | - | PP1 | PP1 | PP1 | PP1 | PP1 |
| | | CB | Content | mass% | 2,8 | 2,8 | 2,8 | 2,8 | 12 |
| | | Luminescent compound | Type | - | Luminescent compound 1 | Luminescent compound 1 | Luminescent compound 1 | Luminescent compound 1 | - |
| | | | Content (Ctc) | mass% | 0,0103 | 0,0097 | 0,0088 | 0,0072 | 0 |
| | Covering layer (polymer layer) | Resin used | Type | - | PP2 | PP2 | PP2 | PP2 | PP2 |
| | | CB | Content | mass% | 2,8 | 2,8 | 2,8 | 2,8 | 12 |
| | | Luminescent compound | Type | - | Luminescent compound 1 | Luminescent compound 1 | Luminescent compound 1 | Luminescent compound 1 | Luminescent compound 1 |
| | | | Content (Ctr) | mass% | 0 | 0,02 | 0,05 | 0,1 | 0,0666 |
| | Content of polymer layer in resin particles | | | mass% | 3 | 3 | 3 | 3 | 3 |
| | Ctt: content of luminescent compound in resin particles | | | mass% | 0,010 | 0,010 | 0,010 | 0,010 | 0,002 |
| | Cct: content of CB in resin particles | | | mass% | 2,8 | 2,8 | 2,8 | 2,8 | 12 |
| | Ctr/Ctt | | | - | 0 | 2 | 5 | 10 | 33 |
| Foaming step | Foaming temperature | | | °C | 150,8 | 150,8 | 150,8 | 150,8 | 150,8 |
| | Foaming pressure | | | MPaG | 3,4 | 3,4 | 3,4 | 3,4 | 3,8 |
| Expanded beads | Bulk density | | | kg/m³ | 33 | 33 | 34 | 34 | 37 |
| | Heat of fusion of high-temperature peak | | | J/g | 17,3 | 17,4 | 17 | 17,6 | 14,4 |
| | Average cell diameter | | | μm | 99 | 121 | 120 | 110 | 99 |
| | Coefficient of variation in cell diameter | | | % | 16 | 13 | 5 | 7 | 19 |
| Molding conditions | Filling rate P | | | % | 167 | 167 | 165 | 164 | 161 |
| | Molding pressure | | | MPaG | 0,22 | 0,22 | 0,22 | 0,22 | 0,22 |
| Molded article of expanded beads | Molded article density | | | kg/m³ | 57 | 57 | 58 | 58 | 62 |
| | L* value | | | - | 27,6 | 27,6 | 27,2 | 27,7 | 24,8 |

(continued)

| Detection test of light emission reaction | Unit | Example 7 | Example 8 | Example 9 | Example 10 | Example 11 |
|---|---|---|---|---|---|---|
| Maximum value of ratio ($I/I_0$) of peak intensity I | - | 2,15 | 2,3 | 2,71 | 4,79 | 2,24 |

[Table 4]

| | | | Unit | Example 12 | Example 13 | Example 14 | Comparative Example 1 | Comparative Example 2 | Comparative Example 3 |
|---|---|---|---|---|---|---|---|---|---|
| Resin particles | Core layer (foamed layer) | Resin used — Type | - | PP1 | PP1 | PP1 | PP1 | PP1 | PP1 |
| | | CB — Content | mass% | 12 | 2,8 | - | 2,8 | 2,4 | 2,8 |
| | | Luminescent compound — Type | - | Luminescent compound 1 | Luminescent compound 1 | Luminescent compound 1 | - | Luminescent compound 2 | Luminescent compound 3 |
| | | Luminescent compound — Content (Ctc) | mass% | 0,02 | 0,001 | 0 | 0 | 0,18 | 0,5 |
| | Covering layer (polymer layer) | Resin used — Type | - | | | PP2 | PP2 | | |
| | | CB — Content | mass% | | | 0 | 2,8 | | |
| | | Luminescent compound — Type | - | - | - | Luminescent compound 1 | - | - | - |
| | | Luminescent compound — Content (Ctr) | mass% | | | 0,0666 | 0 | | |
| | Content of polymer layer in resin particles | | mass% | - | - | 3 | 3 | | |
| | Ctt: content of luminescent compound in resin particles | | mass% | 0,02 | 0,001 | 0,002 | 0 | 0,180 | 0,500 |
| | Cct: content of CB in resin particles | | mass% | 12 | 2,8 | 0 | 2,8 | 2,4 | 2,8 |
| | Ctr/Ctt | | - | - | - | 33 | - | - | - |
| Foaming step | Foaming temperature | | °C | 150,1 | 151,0 | 150,8 | 150,9 | 151,0 | 150,8 |
| | Foaming pressure | | MPaG | 4,0 | 3,2 | 3,3 | 3,3 | 3,4 | 3,4 |
| Expanded beads | Bulk density | | kg/m³ | 34 | 35 | 35 | 35 | 34 | 35 |
| | Heat of fusion of high-temperature peak | | J/g | 16 | 16,5 | 17,3 | 16,5 | 16,8 | 16,4 |
| | Average cell diameter | | μm | 73 | 106 | 115 | 109 | 52 | 93 |
| | Coefficient of variation in cell diameter | | % | 27 | 10 | 12 | 6 | 15 | 18 |
| Molding conditions | Filling rate P | | % | 164 | 165 | 167 | 164 | 163 | 164 |
| | Molding pressure | | MPaG | 0,22 | 0,22 | 0,22 | 0,22 | 0,22 | 0,22 |

| | | Unit | Example | Example | Example | Comparative Example | Comparative Example | Comparative Example |
|---|---|---|---|---|---|---|---|---|
| | | | 12 | 13 | 14 | 1 | 2 | 3 |
| Molded article of expanded beads | Molded article density | kg/m³ | 58 | 60 | 60 | 60 | 59 | 59 |
| | L* value | - | 25,4 | 28,6 | 95,6 | 27,4 | 32,7 | 25,5 |
| Detection test of light emission reaction | Maximum value of ratio (I/I₀) of peak intensity I | - | 1,45 | 1,23 | 5,9 | 1,00 | 1,00 | 1,00 |

The present invention described above includes the following technical ideas.

(1) Thermoplastic polymer expanded beads exhibiting a light emission reaction derived from luminescent rare earth elements upon electromagnetic wave irradiation.

(2) The thermoplastic polymer expanded beads according to (1), wherein the thermoplastic polymer expanded beads include taggant particles configured using the luminescent rare earth elements.

(3) The thermoplastic polymer expanded beads according to (2), wherein a content Ctt of the taggant particles in the thermoplastic polymer expanded beads is 0.0001% by mass or more and 0.5% by mass or less.

(4) The thermoplastic polymer expanded beads according to (3), wherein the thermoplastic polymer expanded beads include a foamed layer formed from a thermoplastic polymer and a polymer layer formed from a polymer, and a ratio [Ctr/Ctt] of a content Ctr of the taggant particles in the polymer layer to the content Ctt of the taggant particles in the thermoplastic polymer expanded beads is 2 or more.

(5) The thermoplastic polymer expanded beads according to (4), wherein the polymer layer is located on a surface of the expanded beads.

(6) The thermoplastic polymer expanded beads according to (4) or (5), wherein the content Ctr of the taggant particles in the polymer layer is 0.001% by mass or more and 5% by mass or less.

(7) The thermoplastic polymer expanded beads according to any one of (4) to (6), wherein the thermoplastic polymer expanded beads have a multilayer structure consisting of the foamed layer and the polymer layer covering an area of 50% or more of a surface of the foamed layer.

(8) The thermoplastic polymer expanded beads according to any one of (1) to (7), wherein the thermoplastic polymer expanded beads include a foamed layer formed from a polyolefin-based resin and a polymer layer formed from a polyolefin-based resin, and a difference [Tmc - Tms] between a melting point Tmc of the polyolefin-based resin constituting the foamed layer and a melting point Tms of the polyolefin-based resin constituting the polymer layer is 3°C or more and 35°C or less.

(9) The thermoplastic polymer expanded beads according to any one of (1) to (8), wherein the thermoplastic polymer expanded beads include carbon particles, and a content Cct of the carbon particles in the thermoplastic polymer expanded beads is 0.01% by mass or more and 15% by mass or less.

(10) The thermoplastic polymer expanded beads according to any one of (1) to (9), wherein the thermoplastic polymer expanded beads comprise a polyolefin-based resin.

(11) The thermoplastic polymer expanded beads according to any one of (1) to (10), wherein the thermoplastic polymer expanded beads contain a recycled-derived thermoplastic polymer.

(12) The thermoplastic polymer expanded beads according to any one of (1) to (11), wherein the light emission reaction are derived from one or more luminescent rare earth elements selected from the group consisting of praseodymium (Pr), neodymium (Nd), samarium (Sm), europium (Eu), terbium (Tb), dysprosium (Dy), holmium (Ho), erbium (Er), and thulium (Tm).

(13) The thermoplastic polymer expanded beads according to any one of (1) to (12), wherein an average cell diameter of the thermoplastic polymer expanded beads is 30 $\mu$m or more and 200 $\mu$m or less, and a coefficient of variation in the cell diameter is 25% or less.

(14) The thermoplastic polymer expanded beads according to (1) to (13), wherein a content Cct of the carbon particles in the thermoplastic polymer expanded beads is 0.01% by mass or more and 15% by mass or less, an average cell diameter of the thermoplastic polymer expanded beads is 30 $\mu$m or more and 200 $\mu$m or less, and a coefficient of variation in the cell diameter is 25% or less.

(15) A molded article of thermoplastic polymer expanded beads produced by in-mold molding the thermoplastic polymer expanded beads according to any one of (1) to (14).

(16) A method for identifying the thermoplastic polymer expanded beads according to any one of (1) to (14) or the molded article of thermoplastic polymer expanded beads produced by in-mold molding the thermoplastic polymer expanded beads according to any one of (1) to (14), the method including:

i) an electromagnetic wave irradiation step of irradiating a surface of the thermoplastic polymer expanded beads or the molded article of thermoplastic polymer expanded beads with electromagnetic waves;
ii) a detection step of detecting, with a detection device, a light emission reaction derived from luminescent rare earth elements due to the electromagnetic wave irradiation to obtain an emission spectrum; and
iii) at least one identification step selected from iii-1) and iii-2) below:

iii-1) an identification step of comparing the emission spectrum with a blank spectrum showing no light emission reaction derived from luminescent rare earth elements; and
iii-2) an identification step of collating the emission spectrum with a preset reference emission spectrum showing a light emission reaction derived from luminescent rare earth elements.

(17) Thermoplastic polymer expanded beads containing a thermoplastic polymer and a luminescent rare earth element component that emits light upon electromagnetic wave irradiation and exhibits a specific emission spectrum, wherein

it is identifiable that the expanded beads are expanded beads containing the luminescent rare earth elements by collating an emission spectrum detected by irradiating the expanded beads with electromagnetic waves with a preset reference emission spectrum showing a light emission reaction derived from luminescent rare earth elements.

(18) Thermoplastic polymer expanded beads formed from a thermoplastic polymer, wherein

it is identifiable that the thermoplastic polymer expanded beads are expanded beads containing luminescent rare earth elements by

    i) an electromagnetic wave irradiation step of irradiating a surface of the expanded beads with electromagnetic waves;

    ii) a detection step of detecting, with a detection device, a light emission reaction derived from luminescent rare earth elements due to the electromagnetic wave irradiation to obtain an emission spectrum; and

    iii-2) an identification step of collating the emission spectrum with a preset reference emission spectrum showing a light emission reaction derived from luminescent rare earth elements.

(19) Thermoplastic polymer expanded beads formed from a thermoplastic polymer, wherein the thermoplastic polymer expanded beads are identified as expanded beads containing luminescent rare earth elements by

    i) an electromagnetic wave irradiation step of irradiating a surface of the expanded beads with electromagnetic waves;

    ii) a detection step of detecting, with a detection device, a light emission reaction derived from luminescent rare earth elements due to the electromagnetic wave irradiation to obtain an emission spectrum; and

    iii-2) an identification step of collating the emission spectrum with a preset reference emission spectrum showing a light emission reaction derived from luminescent rare earth elements.

(20) A molded article of thermoplastic polymer expanded beads, the molded article of expanded beads being produced by in-mold molding expanded beads containing a thermoplastic polymer and a luminescent rare earth element component that emits light upon electromagnetic wave irradiation and exhibits a specific emission spectrum, wherein

    it is identifiable that the molded article of expanded beads is a molded article of expanded beads formed from expanded beads containing the luminescent rare earth elements by

    collating an emission spectrum detected by irradiating the molded article of expanded beads with electromagnetic waves with a preset reference emission spectrum showing a light emission reaction derived from luminescent rare earth elements.

(21) A molded article of thermoplastic polymer expanded beads, the molded article of expanded beads being produced by in-mold molding expanded beads formed from a thermoplastic polymer, wherein

it is identifiable that the molded article of expanded beads is a molded article of expanded beads formed from expanded beads containing luminescent rare earth elements by

    i) an electromagnetic wave irradiation step of irradiating a surface of the molded article of expanded beads with electromagnetic waves;

    ii) a detection step of detecting, with a detection device, a light emission reaction derived from luminescent rare earth elements due to the electromagnetic wave irradiation to obtain an emission spectrum; and

    iii-2) an identification step of collating the emission spectrum with a preset reference emission spectrum showing a light emission reaction derived from luminescent rare earth elements.

(22) A molded article of thermoplastic polymer expanded beads, the molded article of expanded beads being produced by in-mold molding expanded beads formed from a thermoplastic polymer, wherein

the molded article of expanded beads is identified as a molded article of expanded beads formed from expanded beads containing luminescent rare earth elements by

    i) an electromagnetic wave irradiation step of irradiating a surface of the molded article of expanded beads with electromagnetic waves;

    ii) a detection step of detecting, with a detection device, a light emission reaction derived from luminescent rare earth elements due to the electromagnetic wave irradiation to obtain an emission spectrum; and
iii-2) an identification step of collating the emission spectrum with a preset reference emission spectrum showing a light emission reaction derived from luminescent rare earth elements.

Reference Signs List

| | |
|---|---|
| 10 | Taggant particles |
| 20 | Foamed layer |
| 21 | End surface |
| 30 | Polymer layer |
| 40 | Outermost surface layer |
| 100, 100A, 100B, 100C, 100D | Expanded beads |
| d1 | Region |
| S | Chart showing emission spectrum of molded article of expanded beads of Example 1 |
| $S_0$ | Chart showing spectrum of molded article of expanded beads as blank of Example 1 |

**Claims**

1. Thermoplastic polymer expanded beads exhibiting a light emission reaction derived from luminescent rare earth elements upon electromagnetic wave irradiation.

2. The thermoplastic polymer expanded beads according to claim 1, wherein the thermoplastic polymer expanded beads contain taggant particles including the luminescent rare earth elements.

3. The thermoplastic polymer expanded beads according to claim 2, wherein a content Ctt of the taggant particles in the thermoplastic polymer expanded beads is 0.0001% by mass or more and 0.5% by mass or less.

4. The thermoplastic polymer expanded beads according to claim 3, wherein the thermoplastic polymer expanded beads include a foamed layer made of a thermoplastic polymer and a polymer layer made of a polymer, and
a ratio [Ctr/Ctt] of a content Ctr of the taggant particles in the polymer layer to the content Ctt of the taggant particles in the thermoplastic polymer expanded beads is 2 or more.

5. The thermoplastic polymer expanded beads according to claim 4, wherein the polymer layer is located on a surface of the expanded beads.

6. The thermoplastic polymer expanded beads according to claim 4 or 5, wherein the content Ctr of the taggant particles in the polymer layer is 0.001% by mass or more and 5% by mass or less.

7. The thermoplastic polymer expanded beads according to any one of claims 4 to 6, wherein the thermoplastic polymer expanded beads have a multilayer structure constituted of the foamed layer and the polymer layer covering an area of 50% or more of a surface of the foamed layer.

8. The thermoplastic polymer expanded beads according to any one of claims 1 to 7, wherein the thermoplastic polymer expanded beads include a foamed layer made of a polyolefin-based resin and a polymer layer made of a polyolefin-based resin, and
a difference [Tmc - Tms] between a melting point Tmc of the polyolefin-based resin constituting the foamed layer and a melting point Tms of the polyolefin-based resin constituting the polymer layer is 3°C or more and 35°C or less.

9. The thermoplastic polymer expanded beads according to any one of claims 1 to 8, wherein the thermoplastic polymer expanded beads contain carbon particles, and a content Cct of the carbon particles in the thermoplastic polymer expanded beads is 0.01% by mass or more and 15% by mass or less.

10. The thermoplastic polymer expanded beads according to any one of claims 1 to 9, wherein the thermoplastic polymer expanded beads are made of a polyolefin-based resin.

11. The thermoplastic polymer expanded beads according to any one of claims 1 to 10, wherein the thermoplastic polymer expanded beads contain a recycled-derived thermoplastic polymer.

12. The thermoplastic polymer expanded beads according to any one of claims 1 to 11, wherein the light emission reaction is derived from one or more luminescent rare earth elements selected from the group consisting of praseodymium (Pr), neodymium (Nd), samarium (Sm), europium (Eu), terbium (Tb), dysprosium (Dy), holmium (Ho), erbium (Er), and thulium (Tm).

13. The thermoplastic polymer expanded beads according to any one of claims 1 to 12, wherein an average cell diameter of the thermoplastic polymer expanded beads is 30 $\mu$m or more and 200 $\mu$m or less, and a coefficient of variation in the cell diameter is 25% or less.

14. A molded article of thermoplastic polymer expanded beads produced by in-mold molding the thermoplastic polymer expanded beads according to any one of claims 1 to 13.

15. A method for identifying the thermoplastic polymer expanded beads according to any one of claims 1 to 13 or the molded article of thermoplastic polymer expanded beads produced by in-mold molding the thermoplastic polymer expanded beads according to any one of claims 1 to 13, the method comprising:

i) an electromagnetic wave irradiation step of irradiating a surface of the thermoplastic polymer expanded beads or the molded article of thermoplastic polymer expanded beads with electromagnetic waves;
ii) a detection step of detecting, with a detection device, a light emission reaction derived from luminescent rare earth elements due to the electromagnetic wave irradiation to obtain an emission spectrum; and
iii) at least one identification step selected from iii-1) and iii-2) below:

iii-1) an identification step of comparing the emission spectrum with a blank spectrum showing no light emission reaction derived from luminescent rare earth elements; and
iii-2) an identification step of collating the emission spectrum with a preset reference emission spectrum showing a light emission reaction derived from luminescent rare earth elements.

【FIG.1】

100 (100A)

20

10

【FIG.2】

100 (100B)

20

30

10

【FIG.3】

【FIG.4】

【FIG.5】

【FIG.6】

【FIG.7】

## INTERNATIONAL SEARCH REPORT

| International application No. |
|---|
| **PCT/JP2024/030554** |

**A. CLASSIFICATION OF SUBJECT MATTER**

*C08J 9/18*(2006.01)i; *B29C 44/00*(2006.01)i; *B29C 44/44*(2006.01)i
FI:   C08J9/18 CES; B29C44/00 G; B29C44/44

According to International Patent Classification (IPC) or to both national classification and IPC

**B. FIELDS SEARCHED**

Minimum documentation searched (classification system followed by classification symbols)

C08J9/00-9/42; B29C44/00-44/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2016/199693 A1 (JSP CORPORATION) 15 December 2016 (2016-12-15) paragraphs [0002], [0013]-[0018], claims | 1-3, 9-14 |
| Y | JP 2003-340954 A (DAI NIPPON PRINTING CO., LTD.) 02 December 2003 (2003-12-02) claims, paragraphs [0011]-[0025], [0038]-[0042] | 1-3, 9-14 |
| A | JP 2022-187940 A (CANON KABUSHIKI KAISHA) 20 December 2022 (2022-12-20) entire text | 1-15 |
| A | JP 2009-505109 A (COMMONWEALTH SCIENTIFIC AND INDUSTRIAL RESEARCH ORGANISATION) 05 February 2009 (2009-02-05) entire text | 1-15 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **10 October 2024** | **22 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/030554**

| Patent document cited in search report | | | Publication date (day/month/year) | Patent family member(s) | | | Publication date (day/month/year) |
|---|---|---|---|---|---|---|---|
| WO | 2016/199693 | A1 | 15 December 2016 | US 2018/0163010 A1 paragraphs [0002], [0016]-[0021], claims EP 3309196 A1 CN 107709425 A KR 10-2018-0017125 A TW 201708334 A | | | |
| JP | 2003-340954 | A | 02 December 2003 | US 2003/0180482 A1 paragraphs [0015]-[0024], [0049]-[0052], claims EP 1346839 A2 | | | |
| JP | 2022-187940 | A | 20 December 2022 | (Family: none) | | | |
| JP | 2009-505109 | A | 05 February 2009 | US 2009/0303473 A1 WO 2007/022570 A1 CA 2619702 A CN 101291721 A ZA 200801709 A AU 2006284515 A RU 2008110930 A TW 200730567 A | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010149297 A
- WO 2022191310 A1
- JP 2006249075 A
- JP 2022187940 A
- US 20100207067 A